# EUROPEAN PATENT APPLICATION

(11) **EP 4 472 306 A1**
(43) Date of publication of application: **04.12.2024**
(21) Application number: 23746449.0
(22) Date of filing: 29.01.2023
(51) Int. Cl.: H04W 64/00, G06N 20/00

(54) **POSITIONING METHOD BASED ON ARTIFICIAL INTELLIGENCE (AI) MODEL, AND COMMUNICATION DEVICE**

(30) Priority: 29.01.2022 CN 202210113101
(71) Applicant: VIVO MOBILE COMMUNICATION CO., LTD., Dongguan, Guangdong 523863 (CN)
(72) Inventor: WANG, Yuanyuan, Dongguan, Guangdong 523863 (CN); WU, Huaming, Dongguan, Guangdong 523863 (CN); ZHUANG, Zixun, Dongguan, Guangdong 523863 (CN)
(74) Representative: Lavoix
(86) International application number: PCT/CN2023/073715
(87) International publication number: WO 2023/143572

(57) **Abstract**

This application discloses a positioning method based on an artificial intelligence AI model and a communication device, and belongs to the field of communication technology. The positioning method based on an artificial intelligence AI model according to embodiments of this application includes: A first communication device obtains first information associated with AI model-related information; and the first communication device determines target information based on the first information, where the target information includes at least one of the following: a target AI model, validity information of the AI model-related information, or feedback information obtained by performing positioning based on the target AI model; and the first information indicates a valid application range of the AI model-related information, and the AI model-related information includes at least one of the following: the AI model, an AI model parameter, an input of the AI model, and an output of the AI model.

## Description

### CROSS-REFERENCE TO RELATED APPLICATIONS

This application claims priority to Chinese Patent Application No. 202210113101.4, filed on January 29, 2022, entitled "POSITIONING METHOD BASED ON ARTIFICIAL INTELLIGENCE AI MODEL AND COMMUNICATION DEVICE", which is incorporated herein by reference in its entirety.

### TECHNICAL FIELD

This application belongs to the field of communication technology, and specifically relates to a positioning method based on artificial intelligence AI model and a communication device.

### BACKGROUND

With increasing maturity of a positioning technology, an increasing number of terminal devices are equipped with positioning functions. To improve positioning efficiency, an artificial Intelligence (Artificial Intelligence, AI) model may be employed to obtain positioning data. However, measurement data and a requirement for positioning are subject to change over time. In other words, the AI model used may not meet a requirement of an actual scenario over time, and consequently, a positioning result does not meet the requirement of the actual scenario. Therefore, for a person skilled in the art, there is an urgent need to implement a positioning solution based on an AI model that meets a requirement of an actual scenario.

### SUMMARY

A positioning result based on an AI model does not meet a requirement of an actual scenario.

According to a first aspect, a positioning method based on an artificial intelligence AI model is provided and is applied to a first communication device. The method includes:

The first communication device obtains first information associated with AI model-related information; and
the first communication device determines target information based on the first information, where the target information includes at least one of the following: a target AI model, validity information of the AI model-related information, or feedback information obtained by performing positioning based on the target AI model; and
the first information indicates a valid application range of the AI model-related information, and the AI model-related information includes at least one of the following: the AI model, an AI model parameter, an input of the AI model, and an output of the AI model.

According to a second aspect, a positioning method based on an AI model is provided and is applied to a second communication device. The method includes:

The second communication device receives target information sent by a first communication device, where the target information includes at least one of the following: a target AI model, validity information of the AI model-related information, or feedback information obtained by performing positioning based on the target AI model; and
the target information is determined based on first information associated with the AI model-related information, the first information indicates a valid application range of the AI model-related information, and the AI model-related information includes at least one of the following: the AI model, an AI model parameter, an input of the AI model, and an output of the AI model.

According to a third aspect, a positioning apparatus based on an AI model is provided, including:
an obtaining module, configured to obtain first information associated with AI model-related information; and
a processing module, configured to determine target information based on the first information, where the target information includes at least one of the following: a target AI model, validity information of the AI model-related information, or feedback information obtained by performing positioning based on the target AI model; and
the first information indicates a valid application range of the AI model-related information, and the AI model-related information includes at least one of the following: the AI model, an AI model parameter, an input of the AI model, and an output of the AI model.

According to a fourth aspect, a positioning apparatus based on an AI model is provided, including:
a receiving module, configured to receive target information sent by a first communication device, where the target information includes at least one of the following: a target AI model, validity information of the AI model-related information, or feedback information obtained by performing positioning based on the target AI model; and
the target information is determined based on first information associated with the AI model-related information, the first information indicates a valid application range of the AI model-related information, and the AI model-related information includes at least one of the following: the AI model, an AI model parameter, an input of the AI model, and an output of the AI model.

According to a fifth aspect, a first communication device is provided. The first communication device includes a processor and a memory. The memory stores a program or instructions that can be run on the processor, and when the program or the instructions are executed by the processor, steps of the method according to the first aspect are implemented.

According to a sixth aspect, a first communication device is provided, including a processor and a communication interface. The communication interface is configured to obtain first information associated with AI model-related information; and the processor is configured to determine target information based on the first information, where the target information includes at least one of the following: a target AI model, validity information of the AI model-related information, or feedback information obtained by performing positioning based on the target AI model; and the first information indicates a valid application range of the AI model-related information, and the AI model-related information includes at least one of the following: the AI model, an AI model parameter, an input of the AI model, and an output of the AI model.

According to a seventh aspect, a second communication device is provided. The second communication device includes a processor and a memory. The memory stores a program or instructions that can be run on the processor, and when the program or the instructions are executed by the processor, steps of the method according to the second aspect are implemented.

According to an eighth aspect, a second communication device is provided, including a processor and a communication interface. The communication interface is configured to receive target information sent by a first communication device, where the target information includes at least one of the following: a target AI model, validity information of the AI model-related information, or feedback information obtained by performing positioning based on the target AI model; and the target information is determined based on first information associated with the AI model-related information, the first information indicates a valid application range of the AI model-related information, and the AI model-related information includes at least one of the following: the AI model, an AI model parameter, an input of the AI model, and an output of the AI model.

According to a ninth aspect, a communication system is provided, including: a first communication device and a second communication device, where the first communication device may be configured to perform steps of the positioning method based on an AI model according to the first aspect, and the second communication device may be configured to perform steps of the positioning method based on an AI model according to the second aspect.

According to a tenth aspect, a readable storage medium is provided. The readable storage medium stores a program or instructions, and when the program or the instructions are executed by a processor, steps of the method according to the first aspect are implemented, or steps of the method according to the second aspect are implemented.

According to an eleventh aspect, a chip is provided. The chip includes a processor and a communication interface. The communication interface is coupled to the processor, and the processor is configured to run a program or instructions, to implement the method according to the first aspect or the method according to the second aspect.

According to a twelfth aspect, a computer program/program product is provided. The computer program/program product is stored in a storage medium. The computer program/program product is executed by at least one processor, to implement steps of the positioning method based on an AI model according to the first aspect or the second aspect.

In embodiments of this application, the first communication device obtains the first information associated with the AI model-related information. The first communication device determines the target information based on the first information, where the target information includes at least one of the following: the target AI model, the validity information of the AI model-related information, or the feedback information obtained by performing positioning based on the target AI model. Because the first information indicates the valid application range of the AI model-related information, the target information is determined based on the first information, so that the AI model used for positioning better meets the requirement of the actual scenario, and the AI model and/or the AI model parameter can be updated based on the determined target information, so that the positioning result obtained based on the updated AI model is more accurate.

### BRIEF DESCRIPTION OF THE DRAWINGS

FIG. 1 is a diagram of a structure of a wireless communication system to which an embodiment of this application is applicable;
FIG. 2 is a first block diagram of an AI model principle of a positioning method based on an AI model according to an embodiment of this application;
FIG. 3 is a second block diagram of an AI model principle of a positioning method based on an AI model according to an embodiment of this application;
FIG. 4 is a schematic flowchart of a positioning method based on an AI model according to an embodiment of this application;
FIG. 5 is a first diagram of an interaction procedure of a positioning method based on an AI model according to an embodiment of this application;
FIG. 6 is a second diagram of an interaction procedure of a positioning method based on an AI model according to an embodiment of this application;
FIG. 7 is a third diagram of an interaction procedure of a positioning method based on an AI model according to an embodiment of this application;
FIG. 8 is a first diagram of a parameter range of a positioning method based on an AI model according to an embodiment of this application;
FIG. 9 is a second diagram of a parameter range of a positioning method based on an AI model according to an embodiment of this application;
FIG. 10 is a fourth diagram of an interaction procedure of a positioning method based on an AI model according to an embodiment of this application;
FIG. 11 is a fifth diagram of an interaction procedure of a positioning method based on an AI model according to an embodiment of this application;
FIG. 12 is a sixth diagram of an interaction procedure of a positioning method based on an AI model according to an embodiment of this application;
FIG. 13 is a first diagram of a structure of a positioning apparatus based on an AI model according to an embodiment of this application;
FIG. 14 is a second diagram of a structure of a positioning apparatus based on an AI model according to an embodiment of this application;
FIG. 15 is a diagram of a structure of a communication device according to an embodiment of this application;
FIG. 16 is a diagram of a hardware structure of a terminal according to an embodiment of this application;
FIG. 17 is a diagram of a structure of a network-side device according to an embodiment of this application; and
FIG. 18 is a diagram of a structure of another network-side device according to an embodiment of this application.

### DETAILED DESCRIPTION

The following clearly describes the technical solutions in embodiments of this application with reference to the accompanying drawings in embodiments of this application. It is clear that the described embodiments are some but not all of embodiments of this application. All other embodiments obtained by a person skilled in the art based on the embodiments of this application shall fall within the protection scope of this application.

In the specification and claims of this application, the terms "first", "second", and the like are intended to distinguish similar objects, but are unnecessarily used for describing a specific order or sequence. It should be understood that terms used in such a way are interchangeable in proper circumstances, so that embodiments of this application described herein can be implemented in an order different from the order illustrated or described herein. In addition, the objects distinguished by "first" and "second" are usually one category, and a quantity of objects is not limited. For example, the first object may be one or more. In addition, "and/or" used in this specification and the claims indicates at least one of connected objects. The character "/" usually indicates an "or" relationship between associated objects.

It is worth noting that, the technology described in embodiments of this application is not limited to being used in a long-term evolution (Long-Term Evolution, LTE)/LTE-advanced (LTE-Advanced, LTE-A) system, but may be used in another wireless communication system, for example, a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency-division multiple access (Orthogonal Frequency-Division Multiple Access, OFDMA) system, a single carrier-frequency division multiple access (Single Carrier-Frequency Division Multiple Access, SC-FDMA) system, and another system. The terms "system" and "network" are often interchangeably used in embodiments of this application, and the technology described may be used for both the system and radio technology mentioned above, and used for another system and radio technology. The following descriptions describe a new radio (New Radio, NR) system for purposes of examples, and the term of NR is used in most of the descriptions below, but these technologies are also applicable to an application beyond an NR system application, for example, a 6^{th} generation (6^{th} Generation, 6G) communication system.

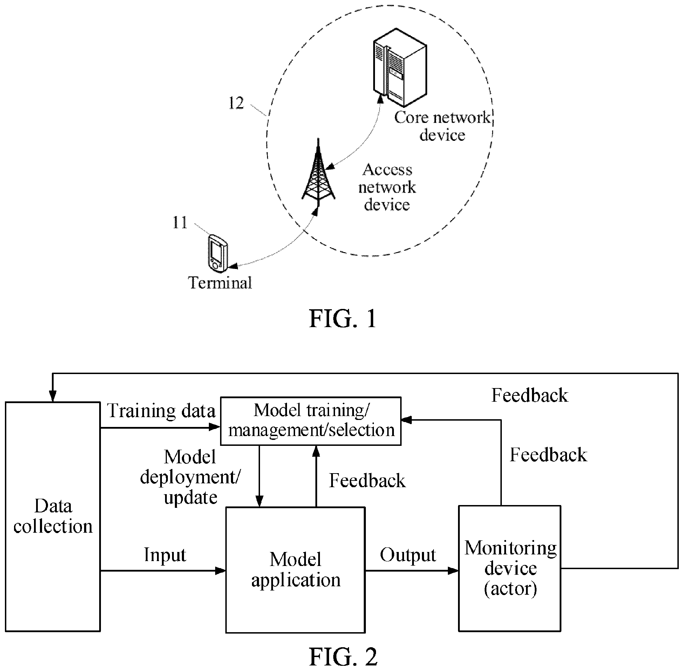

FIG. 1 is a block diagram of a wireless communication system to which an embodiment of this application is applicable. The wireless communication system includes a terminal 11 and a network-side device 12. The terminal 11 may be a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), an in-vehicle device (VUE), a pedestrian terminal (PUE), a smart home (home devices with a wireless communication function, such as a refrigerator, a television, a washing machine, or furniture), a game console, a personal computers (personal computer, PC), a teller machine, a self-service machine, or another terminal-side device. The wearable device includes: a smart watch, a smart band, smart headphones, smart glasses, smart jewelry (a smart bangle, a smart bracelet, a smart ring, a smart necklace, a smart ankle bracelet, a smart anklet, and the like), a smart wristband, smart clothing, and the like. It should be noted that, a specific type of the terminal 11 is not limited in embodiments of this application. The network-side device 12 may include an access network device or a core network device. The access network device 12 may alternatively be referred to as a radio access network device, a radio access network (Radio Access Network, RAN), a radio access network function, or a radio access network element. The access network device 12 may include a base station, a WLAN access point, a Wi-Fi node, and the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmission Reception Point, TRP), or another proper term in the art. As long as the same technical effect is achieved, the base station is not limited to a specific technical vocabulary. It needs to be noted that, only a base station in an NR system is used as an example in embodiments of this application, and a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or an L-NEF), a binding support function (Binding Support Function, BSF), an application function (Application Function, AF), a location management function (location management function), an evolved servicing mobile location center E-SMLC, a network data analytics function (network data analytics function, NWDAF), and the like. It needs to be noted that, only a core network device in an NR system is used as an example in embodiments of this application, and a specific type of the core network device is not limited.

AI is currently gaining wide application in various fields. There are a plurality of implementations of an AI model, for example, a neural network, a decision tree, a support vector machine, a Bayes classifier, and the like. A neural network is used as an example for descriptions in embodiments of this application, and a specific type of AI model is not limited. The neural network includes neurons, where ai, a₂, ..., and a_{K} are inputs, w is a weight (multiplicative coefficient), b is a bias (additive coefficient), and σ (.) is an activation function. Common activation functions include sigmoid, tanh, a rectified linear unit (Rectified Linear Unit, ReLU), and the like. A parameter of the neural network is optimized by using an optimization algorithm. The optimization algorithm is an algorithm that allows to minimize or maximize an objective function (sometimes referred to as a loss function). The objective function is often a mathematical combination of model parameters and data. For example, given data x and a label Y corresponding to x, a neural network model f (.) is constructed. According to the model, a predicted output f (x) can be obtained based on the input x, and a gap (f(x)-Y) between a predicted value and an actual value, that is, the loss function, can be calculated. A proper w needs to be found, to ensure that b minimizes a value of the foregoing loss function. A smaller loss value indicates that the model is closer to a model in an actual case.

Currently common optimization algorithms are basically based on an error back propagation (error Back Propagation, BP) algorithm. A basic idea of the BP algorithm is that a learning process includes two processes, signal forward propagation and error back propagation. In the forward propagation, an input sample is transmitted from an input layer, processed layer by layer through each hidden layer, and then transmitted to an output layer. If an actual output of the output layer does not match a desired output, an error back propagation stage is entered. In the error back propagation, an output error is back propagated in a specific form layer by layer to an input layer through a hidden layer, and the error is apportioned to all units at each layer, to obtain an error signal of the units at each layer. The error signal is used as a basis for correcting a weight of each unit. The weight adjustment process of signal forward propagation and error back propagation at each layer is performed on a recurring basis. The constant weight adjustment process is a learning training process of a network. The process proceeds until the output error of the network is reduced to an acceptable level, or until a preset quantity of learning times are reached.

Common optimization algorithms are gradient descent (Gradient Descent), stochastic gradient descent (Stochastic Gradient Descent, SGD), mini-batch gradient descent (mini-batch gradient descent), momentum (Momentum), Nesterov (the inventor's name, specifically indicating stochastic gradient descent with momentum), adaptive gradient descent (ADAptive GRADient descent, Adagrad), adadelta, root mean square prop (root mean square prop, RMSprop), adaptive moment estimation (Adaptive Moment Estimation, Adam), and the like.

The optimization algorithms in error back propagation obtain a gradient and pass the gradient to an upper layer based on an error/a loss obtained from the loss function, taking derivatives/bias of a current neuron, and adding effects of the learning rate, previous gradient/derivative/bias, and the like.

The method in this embodiment of this application may be used in a positioning scenario. For example, positioning is performed based on an AI model. Because a measurement environment and a requirement are subject to change over time, a positioning result obtained by the AI model may not meet a current requirement over time. Therefore, the method in this embodiment of this application may determine, depending on an actual case, whether or not a current AI model is valid, and update the AI model and/or the AI model parameter based on the determination, to ensure that the AI positioning result satisfies a performance indicator.

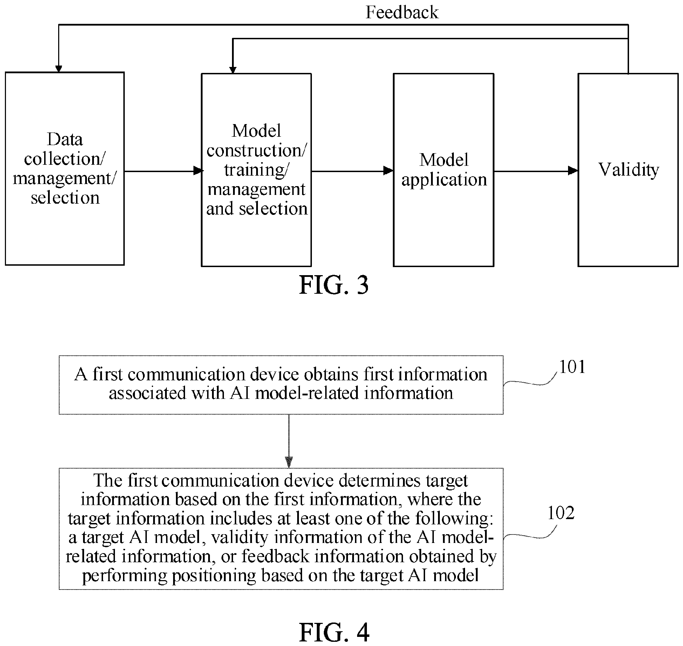

In an embodiment, FIG. 2 and FIG. 3 are block diagrams of principles of an AI model application. The AI model application (AI inference) is a process of obtaining an output based on an AI model and an AI model parameter and current input data.

A positioning method based on an AI model provided in embodiments of this application is described in detail below by using some embodiments and application scenarios thereof with reference to the accompanying drawings.

FIG. 4 is a schematic flowchart of a positioning method based on an AI model according to an embodiment of this application. As shown in FIG. 4, the method provided in this embodiment includes the following steps.

Step 101: A first communication device obtains first information associated with AI model-related information.

The first information indicates a valid application range of the AI model-related information, and the AI model-related information includes at least one of the following: the AI model, an AI model parameter, an input of the AI model, and an output of the AI model.

Specifically, the first information is associated with the AI model-related information, and the first information indicates the valid application range of the AI model-related information, for example, an input valid range, an output valid range, a validity condition, and the like.

It should be noted that, the AI model-related information is only used for ensuring that the selected and specific AI model can be understood and confirmed by the first communication device and another communication devices. A specific transmission format and transmission mode is not limited herein. The AI model-related information is also a corresponding characteristic for protecting the AI model.

Optionally, the first communication device may obtain the AI model-related information and the first information associated with the AI model-related information from a second communication device (for example, a model management device, a network-side device (for example, an NWDAF), a positioning server (for example, an LMF or an E-SMLC), and the like).

It is worth noting that, the first information may be included in the AI model-related information for transmitting, may be transmitted with the AI model-related information, or may be independent of the AI-model-related information for transmitting but associated by the identification information of the AI model and the first information.

Step 102: The first communication device determines target information based on the first information, where the target information includes at least one of the following: a target AI model, validity information of the AI model-related information, or feedback information obtained by performing positioning based on the target AI model.

Specifically, the target information may be determined based on a valid application range of a parameter in the first information. For example, the first information associated with the AI-model-related information may determine the valid application range of the AI-model-related information, and it indicates that the AI-model-related information is valid in a specific scenario or in a specific region. For another example, assuming that the output of the AI model falls within the valid application range of the parameter in the first information, it indicates that the output of the AI model is valid. In another example, assuming that the input of the AI model falls within the valid application range of the parameter in the first information, it indicates that the input/output of the AI model is valid or that the AI model is valid.

In another embodiment, assuming that there are a plurality of AI models and each AI model is associated with corresponding first information, one or more AI models in the plurality of AI models are determined as the target AI models based on the first information.

For example, the feedback information may include the validity information, the target AI model, the input of the AI model, the output of the AI model, measurement information of the terminal, and the like.

Optionally, the feedback information has a mapping relationship with the first information.

Optionally, the first communication device may send the feedback information to the second communication device, and the second communication device may update the AI model and/or the AI model parameter based on the feedback information.

Optionally, the first communication device includes at least one of the following: a location management function (Location Management Function, LMF) network element and an evolved device of the LMF network element;
a positioning server;
a network data analytics function (NetWork Data Analytics Function, NWADF) network element;
another network-side device;
a terminal; and
a monitoring device actor.

The another network-side device includes, for example, an access network device, a device other than the foregoing core network element, and the like.

According to the method in this embodiment, the first communication device obtains the first information associated with the AI model-related information. The first communication device determines the target information based on the first information, where the target information includes at least one of the following: the target AI model, the validity information of the AI model-related information, or the feedback information obtained by performing positioning based on the target AI model. Because the first information indicates the valid application range of the AI model-related information, the target information is determined based on the first information, so that the AI model used for positioning better meets a requirement of an actual scenario, and the AI model and/or the AI model parameter can be updated based on the determined target information, so that a positioning result obtained based on the updated AI model is more accurate.

Optionally, the validity information includes at least one of the following:
validity indication information, indicating whether the AI model-related information is valid;
a validity degree;
a validity class;
a cause of invalidity;
reliability indication information, indicating whether a positioning result obtained based on the target AI model is reliable;
a reliability degree; and
a reliability rating.

The validity indication information may be indicated by at least one bit, for example, 0 means invalid and 1 means valid.

The reliability indication information is similar to the validity indication information.

The validity degree may be indicated by at least one bit, for example, a validity degree between 0 to 1.

Optionally, the input of the AI model and/or the output of the AI model include/includes at least one of the following:
positioning signal measurement information of the terminal; position information of the terminal; error information; a channel impulse response CIR; a power of a first path; a delay of a first path; a time of arrival TOA of a first path; a reference signal time difference RSTD of a first path; an angle of arrival of a first path; an antenna subcarrier phase difference of a first path; a power of a multipath; a delay of a multipath; a TOA of a multipath; an RSTD of a multipath; an angle of arrival of a multipath; an antenna subcarrier phase difference of a multipath; an average excess delay; a root-mean-square delay spread; and a coherence bandwidth.

The error information includes at least one of the following: a position error value, a measurement error value, an AI model error value, or an AI model parameter error value.

In an embodiment, the method further includes:
obtaining, by the first communication device, second information of a target terminal, where the second information indicates positioning-related information obtained by the target terminal.

Step 102 may be implemented in the following manner.

The first communication device determines the target information based on the first information and the second information.

Specifically, the first information indicates the valid application range of the AI model-related information, and the second information indicates the positioning-related information obtained by the target terminal, for example, the measurement information of the terminal, the position information of the terminal, and the like. The target terminal may be a terminal that needs to be positioned.

The first communication device determines, based on the first information and the second information, at least one of the target AI model, the validity information of the AI model-related information, or the feedback information obtained by performing positioning based on the target AI model.

In the foregoing implementation, the first communication device obtains the second information of the target terminal. The first communication device determines the target information based on the first information and the second information, where the target information includes at least one of the following: the target AI model, the validity information of the AI model-related information, or the feedback information obtained by performing positioning based on the target AI model. Because the first information indicates the valid application range of the AI model-related information, the second information indicates the positioning-related information obtained by the target terminal. The target information is determined based on the first information and the second information, so that the AI model used for positioning better meets a requirement of an actual scenario, and the AI model and/or the AI model parameter can be updated based on the determined target information, so that a positioning result obtained based on the updated AI model is more accurate.

In an embodiment, the above step of "the first communication device determines the target information based on the first information and the second information" may include:

The first communication device determines the target information based on a value of a parameter in the second information and a range of a corresponding parameter in the first information.

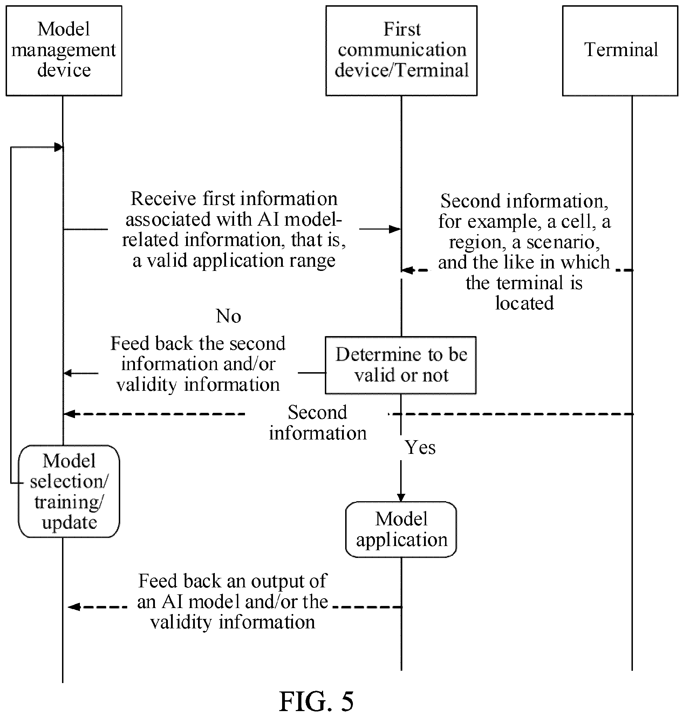

For example, as shown in FIG. 5, the first communication device determines the target information based on the first information, for example, determines the validity information, and feeds back the information to a model management device, and the model management device performs model training and update based on the information fed back by the first communication device.

Optionally, in a case that the validity information indicates that the AI model-related information is invalid, the second communication device may be a model management device, a data management device, or a validity function verification module (for example, an actor).

In a case that the validity information indicates that the AI model-related information is valid, the second communication device is at least one of the following: a model management device, an LMF, an NWDAF, or a validity function verification module (for example, an actor).

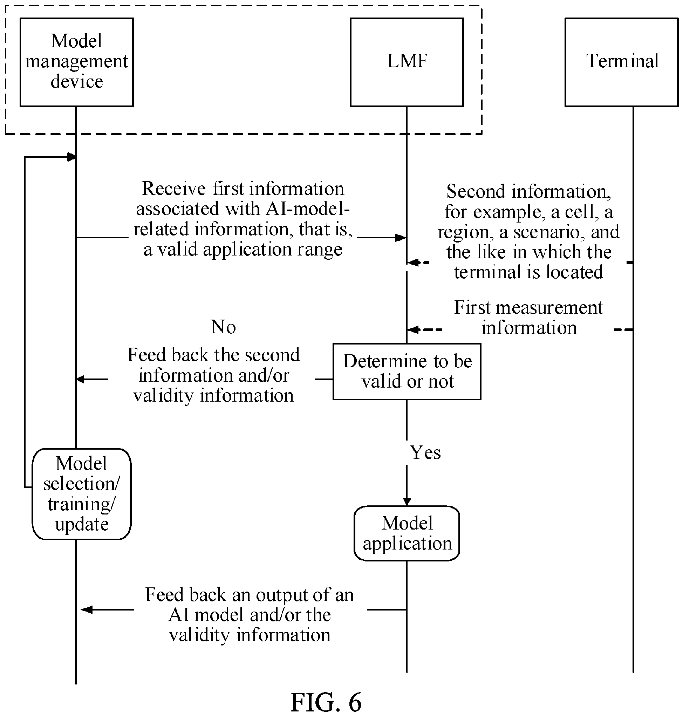

For example, if the first communication device is an LMF, as shown in FIG. 6, the LMF and the model management device may be one device or different devices.

Optionally, the LMF and a model application module are on one device or on different devices.

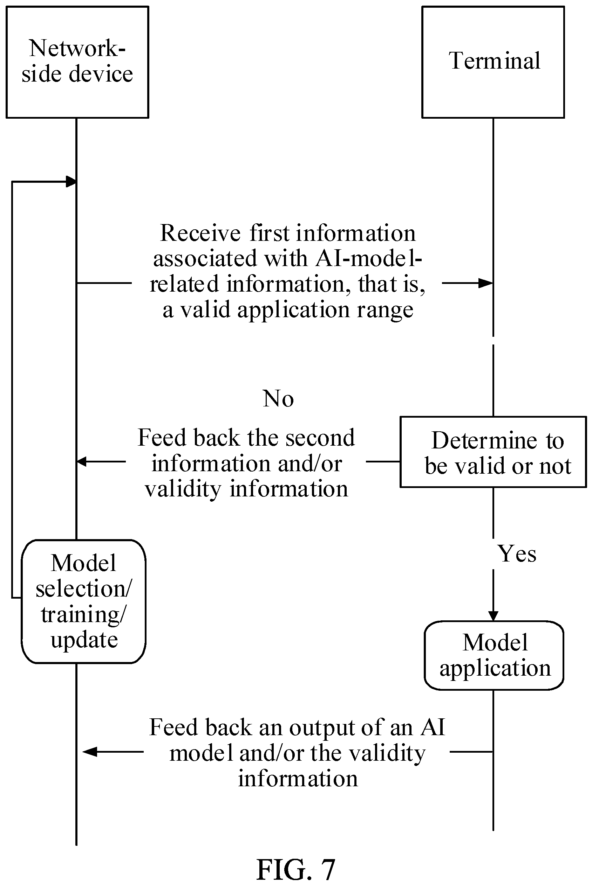

For example, if the first communication device is a terminal, as shown in FIG. 7, the terminal performs positioning based on an AI model and determines validity information.

Optionally, the first information includes at least one of the following: cell information; region information; valid time information; scenario information; and a signal-to-interference-plus-noise ratio SINR range.

The cell information includes at least one of the following:
identification information of one or more cells;
identification information of one or more base stations;
identification information of one or more transmission reception points (Transmission Reception Points, TRPs);
cell list information; and
cell frequency-domain range information, for example, a frequency band identifier ID.

The region information includes at least one of the following:
region identification information; distance range information; and reference point information corresponding to the distance range.

The valid time information includes at least one of the following:
timer duration; and
a timer start time.

The scenario information includes at least one of the following:
a line of sight LOS scenario; a non-line-of-sight NLOS scenario; a complex scenario; an indoor scenario; and an outdoor scenario.

Optionally, the complex scenario is, for example, a hybrid scenario of a plurality of scenarios, and the NLOS scenario may also include an NLOS bad scenario.

For example, the distance range information is valid within a specific distance from a specific reference point, for example, within 500 m.

Optionally, the second information includes at least one of the following: position information of the target terminal, cell information, region information, timer information, scenario information, and an SINR measured by the target terminal.

The cell information is at least one piece of information of a serving cell of the target terminal, a reference cell, or a cell with the strongest reference signal received power RSRP, and the at least one piece of information includes: identification information and frequency-domain information.

The region information is region identification information of the target terminal.

The scenario information is information of a scenario in which the target terminal is located.

Optionally, the position information is obtained in at least one of the following manners, and the at least one manner includes:
an observed time difference of arrival (Observed Time Difference of Arrival, OTDOA) positioning method, a global navigation satellite system (Global Navigation Satellite System, GNSS), a downlink time difference of arrival, an uplink time difference of arrival, an uplink Bluetooth angle of arrival (Angle of Arrival, AoA), a Bluetooth angle of departure (Angle of Departure, AoD), a Bluetooth, a sensor, or wireless fidelity Wi-Fi.

Specifically, the first communication device receives the first information and the AI model-related information, and the first information indicates the valid application range of the AI model-related information, for example, a valid cell, a valid region, a valid time, a valid scenario, and/or a valid SINR range of the AI model-related information.

The second information may be at least one of the position information of the target terminal, the cell information, the region information, the timer information, the scenario information, and the SINR measured by the target terminal.

The target information is determined based on the value of the parameter in the second information and the range of the corresponding parameter in the first information. For example, the value of each parameter in the second information is compared with the range of the corresponding parameter in the first information. If the value of the parameter in the second information falls within the range of the corresponding parameter in the first information, the AI model-related information is valid. It may alternatively be considered that the AI model-related information is valid if all of the parameters in the second information fall within the range of the corresponding parameter in the first information, or values of most of the parameters fall within the range of the corresponding parameter in the first information, or values of some parameters fall outside the range of the corresponding parameter in the first information but do not deviate much from the range.

In an embodiment, that the validity information is determined includes at least one of the following cases.

In a case that the value of the parameter in the second information falls within the range of the corresponding parameter in the first information, the AI model-related information is valid.

If the first communication device determines that cell information of the target terminal does not fall within a range of cell information in the first information, the AI model-related information is invalid.

If the first communication device determines that a timer of the target terminal expires, the AI model-related information is invalid or expires.

If the first communication device determines that scenario information of the target terminal does not fall within a range of scenario information in the first information, the AI model-related information is invalid.

If the first communication device determines that a position of the target terminal does not fall within a position range corresponding to cell information and/or region information in the first information, the AI model-related information is invalid.

Specifically, in a case that the value of the parameter in the second information falls within the range of the corresponding parameter in the first information, the AI model-related information is valid; and in a case that the value of the parameter in the second information falls outside the range of the corresponding parameter in the first information, the AI model-related information is invalid. For example, the following cases are included.

If the cell information of the target terminal does not fall within the range of the cell information in the first information, the AI model-related information is invalid.

If the region information of the target terminal does not fall within the range of the region information in the first information, the AI model-related information is invalid.

If the timer of the target terminal expires, the AI model-related information is invalid or expires.

If the scenario information of the target terminal does not fall within the range of the scenario information in the first information, the AI model-related information is invalid.

If the position of the target terminal does not fall within the position range corresponding to the cell information and/or the region information in the first information, the AI model-related information is invalid.

If the SINR measured by the target terminal does not fall within the SINR range in the first information, the AI model-related information is invalid.

Optionally, the timer of the target terminal satisfies at least one of the following cases:
duration of the timer is timer duration in the first information;
the timer is counted from a timer start time in the first information; and
the timer is re-timed in a case that the AI model is updated and/or the AI model parameter is updated.

Optionally, that the feedback information is determined based on the validity information includes the following several cases:
if the validity information indicates that the AI model-related information is valid, the feedback information at least includes the output of the AI model; or
if the validity information indicates that the AI model-related information is invalid, the feedback information includes at least one of the following: a cause of error; the second information; the validity information; an AI model request; an AI model update request; and a data collection request.

Specifically, after the validity information is determined, content included in the feedback information may be determined based on the validity information. For example, when the AI model-related information is valid, the feedback information at least includes the output of the AI model; or when the AI model-related information is invalid, the feedback information may include at least one of the following: a cause of error; the second information; the validity information; an AI model request; an AI model update request; and a data collection request, used for training, selection, and update of the AI model.

Optionally, the feedback information includes at least one of the following cases:
in a case that the value of the parameter in the second information falls within the range of the corresponding parameter in the first information, the feedback information includes the second information; or
in a case that the value of the parameter in the second information does not fall within the range of the corresponding parameter in the first information, the feedback information includes the second information.

If the first communication device determines that the cell information of the target terminal does not fall within the range of the cell information in the first information, the feedback information includes the cell information of the target terminal.

If the region information of the target terminal does not fall within the range of the region information in the first information, the feedback information includes the region information of the target terminal.

If the first communication device determines that the scenario information of the target terminal does not fall within the range of the scenario information in the first information, the feedback information includes the scenario information of the target terminal.

If the position of the target terminal does not fall within the position range corresponding to the cell information and/or the region information in the first information, the feedback information includes the position information of the target terminal.

If the SINR measured by the target terminal does not fall within the SINR range in the first information, the feedback information includes the SINR measured by the target terminal.

If the first communication device determines that the timer of the target terminal expires, the feedback information includes the timer information of the target terminal, including, for example, the timer duration, the start time, and the like.

Optionally, in a case that the value of the parameter in the second information falls within a first range of the corresponding parameter in the first information, the target AI model is an AI model corresponding to the first range of the first information.

Optionally, the feedback information includes: the target AI model.

Specifically, if the parameter in the first information has a plurality of valid application ranges, different valid application ranges may correspond to different AI models and/or AI model parameters.

If the value of the parameter in the second information falls within a specific first range of the corresponding parameter in the first information, the target AI model may be an AI model corresponding to the first range.

Optionally, the method further includes:
receiving, by the first communication device, a plurality of pre-configured AI models and/or AI model parameters, and first information corresponding to the AI models and/or the AI model parameters.

Optionally, the method further includes:
obtaining, by the first communication device based on the first range of the first information, the AI model corresponding to the first range of the first information from the plurality of pre-configured AI models.

Optionally, in another implementation, the feedback information includes at least one of the following: the validity information, the second information, first measurement information, and the output of the AI model.

The first measurement information includes at least one of the following:
signal measurement information; position information; an error value; channel impulse response (Channel Impulse Response, CIR) information; and power delay profile (Power Delay Profile, PDP) information.

The error information includes at least one of the following: a position error value and a measurement error value.

The CIR information includes, for example, time-domain or frequency-domain impulse response information, processing information (for example, truncation information) of the time-domain or frequency-domain impulse response information, or the like. The CIR information may include single-antenna or multi-antenna CIR information.

In the foregoing implementation, the first communication device determines the target information based on the first information and the second information, where the target information includes at least one of the following: the target AI model, the validity information of the AI model-related information, or the feedback information obtained by performing positioning based on the target AI model. The target information is determined based on the value of the parameter in the second information and the range of the corresponding parameter in the first information, so that the AI model used for positioning better meets a requirement of an actual scenario, and the AI model and/or the AI model parameter can be updated based on the determined target information, so that a positioning result obtained based on the updated AI model is more accurate.

In another embodiment, the second information includes second measurement information obtained by the target terminal, and the step of "the first communication device determines the target information based on the first information and the second information" may be further implemented in the following step:
in a case that the second measurement information is measurement information obtained through one measurement, the first communication device determines the target information based on a value of a parameter in the second measurement information and a range of a corresponding parameter in the first information. It is worth noting that, in one case, the one measurement may be understood as a smooth result of M (where M may be at least one of 1, 2, 3, or 4) measurement instances.

In a case that the second measurement information is measurement information obtained through a plurality of measurements, the first communication device determines the target information based on a consistency of a distribution of parameters in the second measurement information with a distribution of corresponding parameters in the first information.

Specifically, the first communication device receives the first information and the AI model-related information, and the first information indicates the valid application range of the AI model-related information. In this embodiment, the valid application range may specifically indicate a valid application range in which input data of the AI model-related information is obtained, for example, an SINR range, a noise mean and variance, an absolute time (absolute time) mean and variance, a delay spread mean and variance, an angle spread mean and variance, and the like. In other words, the AI model-related information is valid only for the input data in the above valid application range.

In this embodiment, the valid application range may specifically indicate a valid application range in which output data of the AI model-related information is obtained, for example, an SINR range, a noise mean and variance, an absolute time (absolute time) mean and variance, a delay spread mean and variance, an angle spread mean and variance, and the like. For another example, the valid application range may be a range of the measurement information and the position information. In other words, the AI model-related information is valid only for the output data in the above valid application range. For example, if the output measurement information and position information are out of the valid application range, the AI model-related information is invalid.

The second information may be second measurement information measured by the target terminal, including at least one of a signal-to-interference-plus-noise ratio SINR range, a noise value, an NLOS-introduced absolute time value, a delay spread value, an angle spread value, an SINR mean and variance, a noise mean and variance, an NLOS-introduced absolute time mean and variance, a delay spread mean and variance, and an angle spread mean and variance.

In an implementation, in a case that the second measurement information is measurement information obtained through one measurement, the first communication device determines the target information based on a value of a parameter in the second measurement information and a range of a corresponding parameter in the first information. For example, the value of each parameter in the second measurement information is compared with the range of the corresponding parameter in the first information. If the value of the parameter in the second measurement information falls within the range of the corresponding parameter in the first information, the AI model-related information is valid. It may alternatively be considered that the AI model-related information is valid if all of the parameters in the second measurement information fall within the range of the corresponding parameter in the first information, or values of most of the parameters fall within the range of the corresponding parameter in the first information, or values of some parameters fall outside the range of the corresponding parameter in the first information but do not deviate much from the range.

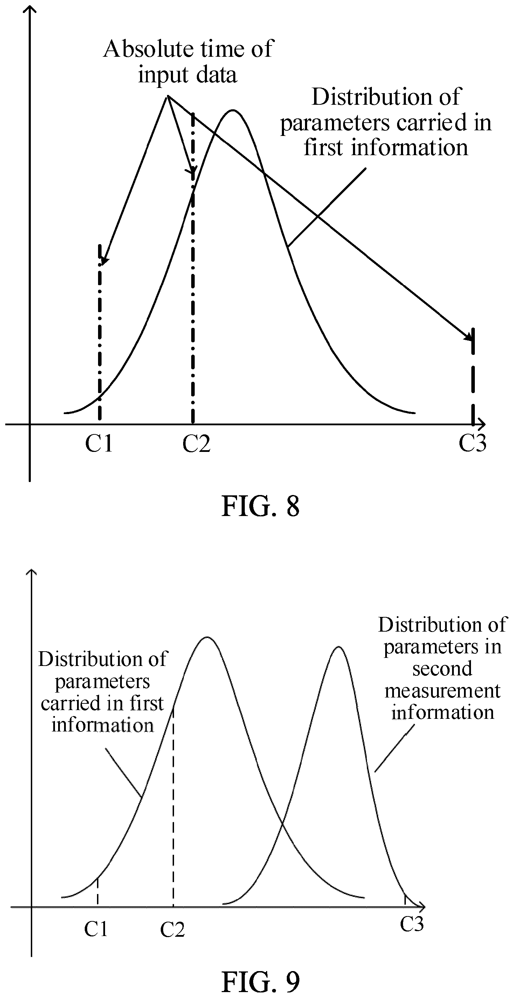

As shown in FIG. 8, for example, absolute times at C1, C2, and C3 are not consistent with the range of the parameter in the first information, and C2 is closer to the range of the parameter in the first information. Therefore, the AI model-related information corresponding to C2 can be considered to be valid, and the AI model-related information corresponding to C1 and C3 is invalid. Therefore, validity of C1, C2, and C3 is not the same, and errors of C1, C2, and C3 are inconsistent.

It is worth noting that, the invalidity can be understood as descriptions of the validity degree. For example, a degree of deviation of C2 from the first information may be expressed as the validity information. Further, in one embodiment, the degree of deviation of C2 from the first information may be expressed as C2-mean/validity range.

In another implementation, in a case that the second measurement information is measurement information obtained through a plurality of measurements, the first communication device determines the target information based on a consistency of a distribution of parameters in the second measurement information with a distribution of corresponding parameters in the first information. For example, the distribution of each parameter in the second measurement information is compared with the distribution of the corresponding parameter in the first information. If the distribution of the parameter in the second measurement information is consistent with the distribution of the corresponding parameter in the first information, the AI model-related information is valid. It may also alternatively considered that the AI model-related information is valid if the distribution of all parameters in the second measurement information is consistent with the distribution of the corresponding parameter in the first information, or the distribution of most of the parameters is consistent with the distribution of the corresponding parameter in the first information, or the distribution of some parameters is not consistent with the distribution of the corresponding parameter in the first information but does not deviate much from the distribution of the corresponding parameter in the first information.

As shown in FIG. 9, a distribution of a specific parameter in the second measurement information differs too much from the distribution of the corresponding parameter in the first information and only has a small portion of intersection, so that the AI model-related information may be considered to be invalid.

It is worth noting that, the invalidity can be understood as descriptions of the validity degree. For example, a degree of deviation of the distribution of a specific parameter in the second measurement information from the first information may be expressed as the validity information.

In the foregoing implementation, the target information is determined based on the value of the parameter in the second measurement information and the range of the corresponding parameter in the first information, and/or the target information is determined based on the distribution of the parameter in the second measurement information and the distribution of the corresponding parameter in the first information, so that the AI model used for positioning better meets a requirement of an actual scenario, and the AI model and/or the AI model parameter can be updated based on the determined target information, so that a positioning result obtained based on the updated AI model is more accurate.

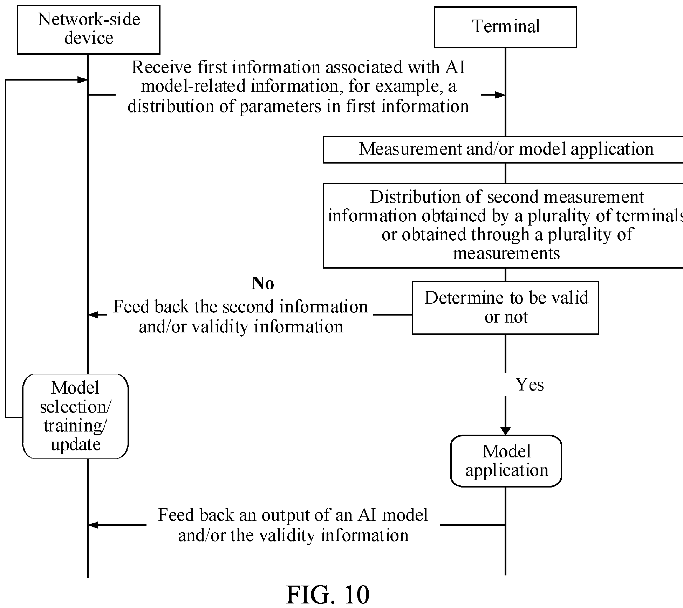

For example, as shown in FIG. 10, the first communication device (for example, the terminal) determines the target information based on the first information and the second measurement information, for example, determines the validity information, and feeds back the information to a model management device (for example, the network-side device), and the model management device performs model training and update based on the information fed back by the first communication device.

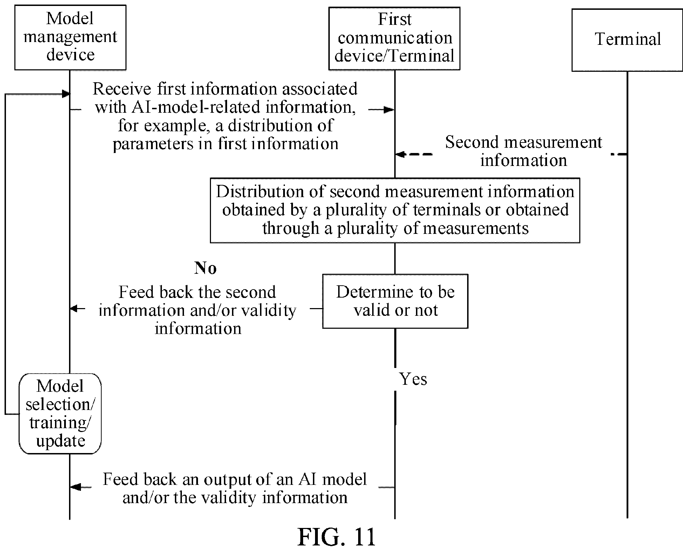

For example, as shown in FIG. 11, the first communication device may be an LMF, and the model management device and the LMF may be one device or different devices. Optionally, the LMF and a model application module may be on one device or on different devices.

Optionally, the first information includes at least one of the following:
an SINR range;
a noise range;
a noise distribution mean and/or variance;
an NLOS-introduced absolute time range or an NLOS-introduced absolute time mean and/or variance;
a delay spread range or a delay spread mean and/or variance;
an angle spread range or an angle spread mean and/or variance;
a range of the first measurement information; and
a mean and/or variance of the first measurement information.

Optionally, the NLOS-introduced absolute time is obtained by subtracting time information obtained by a non-AI model from time information obtained by the AI model; and
the delay spread, the angle spread, and the noise distribution are characteristic information obtained based on the first measurement information or the output of the AI model.

Specifically, the time information includes, for example, an RSTD, a TOA, an Rx-Tx, timer information, and the like.

Optionally, the second measurement information includes at least one of the following:
a signal-to-interference-plus-noise ratio SINR range, a noise value, an NLOS-introduced absolute time value, a delay spread value, an angle spread value, an SINR mean and variance, a noise mean and variance, an NLOS-introduced absolute time mean and variance, a delay spread mean and variance, and an angle spread mean and variance.

The SINR range and the SINR mean and variance are derived from an SINR of at least one piece of information.

The noise value and the noise mean and variance are derived from a noise value of at least one piece of information. The at least one piece of information includes: a measurement channel, a measurement signal, or first measurement information.

Optionally, the first measurement information includes at least one of the following:
signal measurement information; position information; an error value; channel impulse response CIR information; and power delay profile PDP information.

The error information includes at least one of the following: a position error value and a measurement error value.

Optionally, the signal measurement information includes at least one of the following:
a reference signal time difference (Reference Signal Time Difference, RSTD) measurement result, a round trip delay measurement result, an angle of arrival AOA measurement result, an angle of departure AOD measurement result, a reference signal received power (Reference Signal Received Power, RSRP), multipath measurement information, and line of sight LOS indication information.

Optionally, the multipath measurement information includes at least one of the following:
a power of a first path, a time delay of a first path, a time of arrival TOA of a first path, a reference signal time difference RSTD of a first path, an antenna subcarrier phase difference of a first path, an antenna subcarrier phase of a first path, a power of a multipath, a time delay of a multipath, a TOA of a multipath, an RSTD of a multipath, an antenna subcarrier phase difference of a multipath, and an antenna subcarrier phase of a multipath.

Optionally, that the validity information is determined includes at least one of the following cases:
in a case that the value of the parameter in the second measurement information falls within the range of the corresponding parameter in the first information, the AI model-related information is valid; or
in a case that a value of at least one parameter in the second measurement information falls outside the range of the corresponding parameter in the first information, the AI model-related information is invalid.

In a case that a distribution of a parameter in the second measurement information is consistent with a distribution of a corresponding parameter in the first information, the AI model-related information is valid; or
in a case that a distribution of at least one parameter in the second measurement information is not consistent with a distribution of a corresponding parameter in the first information, the AI model-related information is invalid.

Specifically, the value of the parameter in the second measurement information is compared with the range of the corresponding parameter in the first information. If the value of the parameter in the second measurement information falls within the range of the corresponding parameter in the first information, the AI model-related information is valid. It may alternatively be considered that the AI model-related information is valid if all of the parameters in the second measurement information fall within the range of the corresponding parameter in the first information, or values of most of the parameters fall within the range of the corresponding parameter in the first information, or values of some parameters fall outside the range of the corresponding parameter in the first information but do not deviate much from the range.

Alternatively, if the value of at least one parameter in the second measurement information falls outside the range of the corresponding parameter in the first information, or the values of all of the parameters in the second measurement information fall outside the range of the corresponding parameter in the first information, the AI model-related information is invalid.

The distribution of each parameter in the second measurement information is compared with the distribution of the corresponding parameter in the first information. If the distribution of the parameter in the second measurement information is consistent with the distribution of the corresponding parameter in the first information, the AI model-related information is valid. It may alternatively be considered that the AI model-related information is valid if the distribution of all parameters in the second measurement information is consistent with the distribution of the corresponding parameter in the first information, or the distribution of most of the parameters is consistent with the distribution of the corresponding parameter in the first information, or the distribution of some parameters is not consistent with the distribution of the corresponding parameter in the first information but does not deviate much from the distribution of the corresponding parameter in the first information.

Alternatively, if the distribution of the at least one parameter in the second measurement information is not consistent with the distribution of the corresponding parameter in the first information, or the distribution of all of the parameters in the second measurement information is not consistent with the distribution of the corresponding parameter in the first information, the AI model-related information is invalid.

Further, in a case that the distribution of the at least one parameter in the second measurement information is not consistent with the distribution of the corresponding parameter in the first information, or the distribution of the parameter in the second measurement information and the distribution of the corresponding parameter in the first information do not satisfy condition threshold information, the AI model-related information is invalid.

Optionally, the condition threshold information includes at least one of the following:
an absolute time corresponding to a σ principle, a 2σ principle, or a 3σ principle in a normal distribution;
a delay spread value corresponding to a σ principle, a 2σ principle, or a 3σ principle;
an angle spread value corresponding to a σ principle, a 2σ principle, or a 3σ principle;
a maximum difference between a mean of parameters in the second measurement information and a mean of corresponding parameters in the first information;
a maximum variance of a mean of parameters in the second measurement information and a mean of corresponding parameters in the first information;
a maximum difference between a mean of parameters in the second measurement information and a variance of corresponding parameters in the first information; and
a maximum variance of a mean of parameters in the second measurement information and a variance of corresponding parameters in the first information.

In the σ principle, a probability that a value is distributed in (µ-σ, µ+σ) is 0.6526. In the 2σ principle, a probability that a value is distributed in (µ-2σ, µ+2σ) is 0.9544. In the 3σ principle, a probability that a value is distributed in (µ-3σ, µ+3σ) is 0.9974.

In the normal distribution, σ indicates the standard deviation and µ indicates the mean.

Optionally, the feedback information includes at least one of the following: the validity information, the second measurement information, the input of the AI model, the output of the AI model, AI model identification information, and an AI model update request.

Optionally, the AI model update request includes at least one of the following:
an identifier ID of the AI model, an AI model and/or an AI model parameter that satisfy/satisfies the distribution of the second measurement information, and the AI model and/or the AI model parameter.

In an embodiment, that the first information is obtained based on a test set and a validation set of the AI model includes at least one of the following cases:
the first information is characteristic information obtained based on input data of the test set and the validation set of the AI model;
the first information is characteristic information obtained based on output data of the test set and the validation set of the AI model; and
the first information is characteristic information obtained based on input data and output data of the test set and the validation set of the AI model.

The test set may be the second information and the validation set may be the first information.

In an embodiment, the second measurement information is characteristic information obtained based on the first measurement information; or
the second measurement information is characteristic information obtained based on the output of the AI model.

In an embodiment, the second measurement information is characteristic information obtained based on the first measurement information and the output of the AI model.

In an embodiment, the first communication device may send the target information to the second communication device, for example, send the feedback information to the second communication device, and the second communication device may update the AI model and/or the AI model parameter based on the feedback information.

Optionally, the method further includes:
receiving, by the first communication device, an updated AI model and/or AI model parameter, and first information corresponding to the AI model and/or the AI model parameter.

In an embodiment, the AI model includes at least one of the following:
an AI model type; and
an AI model structure.

The AI model type includes, for example: a CNN, unsupervised, semi-supervised, supervised, an RNN, an LSTM, and that the first communication device performs positioning based on AI or the first communication device only needs to perform a part of operations when performing positioning based on AI, and the like.

The AI model structure includes, for example:
a list of neural networks, including at least one of the following: a neuron type of each neural network, a neuron weight and a bias of each neural network;
a loss function type and an optimization function type;
positions and sizes of a pooling layer and a convolutional layer; and
neural networks, for example, a fully connected neural network, a convolutional neural network, a recurrent neural network, a residual network, and the like.

The network structure of the AI model may alternatively be a combination of a plurality of small networks, for example, a fully connected network + a convolutional network, a convolutional network + a residual network, and the like.

The network structure of the AI model may further include: a quantity of layers of hidden layers; a connection manner of an input layer and a hidden layer, a connection manner between a plurality of hidden layers, a connection manner of a hidden layer and an output layer, a quantity of neurons at each layer, and the like.

In another embodiment, the AI model includes at least one of the following:
a list of neural networks, including at least one of the following: a neuron type of each neural network, a neuron weight and a bias of each neural network;
hyperparameter information; and
loss function information.

The hyperparameter information is, for example, a parameter external to the AI model, for example, a pooling size (size), a batch size (indicating a quantity of samples chosen for one training), an iteration manner, and a learning rate, optimization function selection, loss function selection, and other information.

Optionally, the AI parameter includes at least one of the following:
hyperparameter information;
AI model description parameter information;
weight information of the AI model; and
an initial parameter of the AI model.

The AI model description parameter information is, for example, an input format of the AI model parameter, an output format of AI model parameter, and the like.

The initial parameter of the AI model is an initial parameter used for iterating related information about the target AI model.

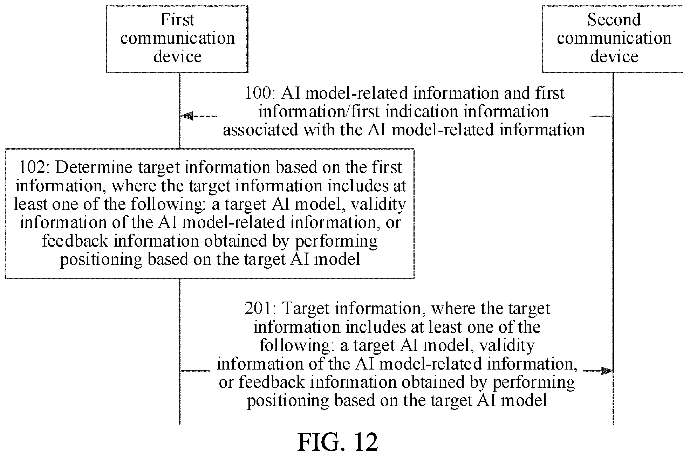

FIG. 12 is a second diagram of an interaction procedure of a positioning method based on an AI model according to an embodiment of this application. As shown in FIG. 12, the method provided in this embodiment includes the following steps.

Step 201: A second communication device receives target information sent by a first communication device, where the target information includes at least one of the following: a target AI model, validity information of the AI model-related information, or feedback information obtained by performing positioning based on the target AI model; and

the target information is determined based on first information associated with the AI model-related information, the first information indicates a valid application range of the AI model-related information, and the AI model-related information includes at least one of the following: the AI model, an AI model parameter, an input of the AI model, and an output of the AI model.

Optionally, the method further includes:
sending, by the second communication device to the first communication device, the AI model-related information and the first information associated with the AI model-related information.

Optionally, the method further includes:
sending, by the second communication device to the first communication device, a plurality of pre-configured AI models and/or AI model parameters, and first information corresponding to the AI models and/or the AI model parameters.

Optionally, the method further includes:
sending, by the second communication device, second information to the first communication device, where the second information indicates positioning-related information obtained by the terminal.

Optionally, the first information includes at least one of the following: cell information; region information; valid time information; scenario information; and a signal-to-interference-plus-noise ratio SINR range.

The cell information includes at least one of the following:
identification information of one or more cells;
identification information of one or more base stations;
identification information of one or more transmission reception points TRPs;
cell list information; and
cell frequency-domain range information.

The region information includes at least one of the following:
region identification information; distance range information; and reference point information corresponding to the distance range.

The valid time information includes at least one of the following:
timer duration; and
a timer start time.

The scenario information includes at least one of the following:
a line of sight LOS scenario; a non-line-of-sight NLOS scenario; a complex scenario; an indoor scenario; and an outdoor scenario.

Optionally, the second information includes at least one of the following: position information of the target terminal, cell information, region information, timer information, scenario information, and an SINR measured by the target terminal.

The cell information is at least one piece of information of a serving cell of the target terminal, a reference cell, or a cell with the strongest reference signal received power RSRP, and the at least one piece of information includes: identification information and frequency-domain information.

The region information is region identification information of the target terminal.

The scenario information is information of a scenario in which the target terminal is located.

Optionally, in a case that a value of a parameter in the second information falls within a range of a corresponding parameter in the first information, the AI model-related information is valid.

Optionally, in a case that a value of a parameter in the second information falls outside a range of a corresponding parameter in the first information, the AI model-related information is invalid.

Optionally, the feedback information includes at least one of the following: the validity information, the second information, first measurement information, and the output of the AI model.

The first measurement information includes at least one of the following:
signal measurement information; position information; an error value; channel impulse response CIR information; and power delay profile PDP information.

Optionally, the second information includes second measurement information obtained by the target terminal, and in a case that a value of a parameter in the second measurement information falls within a range of a corresponding parameter in the first information, the AI model-related information is valid; and/or
in a case that a value of at least one parameter in the second measurement information falls outside the range of the corresponding parameter in the first information, the AI model-related information is invalid.

Optionally, the second information includes second measurement information obtained by the target terminal, and in a case that a distribution of a parameter in the second measurement information is consistent with a distribution of a corresponding parameter in the first information, the AI model-related information is valid; and/or
in a case that a distribution of at least one parameter in the second measurement information is not consistent with a distribution of a corresponding parameter in the first information, the AI model-related information is invalid.

Optionally, in a case that a distribution of at least one parameter in the second measurement information is not consistent with a distribution of a corresponding parameter in the first information, that the AI model-related information is invalid includes:
in a case that the distribution of the parameter in the second measurement information and the distribution of the corresponding parameter in the first information do not satisfy condition threshold information, the AI model-related information is invalid.

Optionally, the condition threshold information includes at least one of the following:
an absolute time corresponding to a σ principle, a 2σ principle, or a 3σ principle in a normal distribution;
a delay spread value corresponding to a σ principle, a 2σ principle, or a 3σ principle;
an angle spread value corresponding to a σ principle, a 2σ principle, or a 3σ principle;
a maximum difference between a mean of parameters in the second measurement information and a mean of corresponding parameters in the first information;
a maximum variance of a mean of parameters in the second measurement information and a mean of corresponding parameters in the first information;
a maximum difference between a mean of parameters in the second measurement information and a variance of corresponding parameters in the first information; and
a maximum variance of a mean of parameters in the second measurement information and a variance of corresponding parameters in the first information.

Optionally, the second measurement information includes at least one of the following:
a signal-to-interference-plus-noise ratio SINR range, a noise value, an NLOS-introduced absolute time value, a delay spread value, an angle spread value, an SINR mean and variance, a noise mean and variance, an NLOS-introduced absolute time mean and variance, a delay spread mean and variance, and an angle spread mean and variance.

The SINR range and the SINR mean and variance are derived from an SINR of at least one piece of information.

The noise value and the noise mean and variance are derived from a noise value of at least one piece of information.

The at least one piece of information includes: a measurement channel, a measurement signal, or first measurement information.

Optionally, the first measurement information includes at least one of the following:
signal measurement information; position information; an error value; channel impulse response CIR information; and power delay profile PDP information.

Optionally, the feedback information includes at least one of the following: the validity information, the second measurement information, the input of the AI model, the output of the AI model, AI model identification information, and an AI model update request.

It is worth noting that, the input of the AI model may be a current input of the AI model or may be an input or a distribution of inputs determined based on a plurality of inputs, to expect a peer end to provide an AI model and parameter that satisfy the inputs.

It is worth noting that, the output of the AI model may be a current output of the AI model or may be an output or a distribution of outputs determined based on a plurality of outputs, to expect a peer end to provide an AI model and parameter that satisfy the outputs.

It is worth noting that, the input and output of the AI model may be a current input and output of the AI model or may be an input and output or a distribution of inputs and outputs determined based on a plurality of inputs and outputs, to expect a peer end to provide an AI model and parameter that satisfy the inputs and outputs.

It is worth noting that, the second measurement information may be obtained through one measurement or may be a distribution of second measurement information determined by a plurality of inputs.

Optionally, the first information includes at least one of the following:
an SINR range;
a noise range;
a noise distribution mean and/or variance;
an NLOS-introduced absolute time range or an NLOS-introduced absolute time mean and/or variance;
a delay spread range or a delay spread mean and/or variance;
an angle spread range or an angle spread mean and/or variance;
a range of the first measurement information; and
a mean and/or variance of the first measurement information.

Optionally, the second communication device includes at least one of the following:
a terminal;
a model management device; and
a network-side device.

Specific implementation processes and technical effects of the method in this embodiment are similar to those in the first communication device-side method embodiment. For details, refer to detailed descriptions of the first communication device-side method embodiment. Details are not described herein again.

The positioning method based on an AI model provided in this embodiment of this application may be performed by a positioning apparatus based on an AI model. The positioning apparatus based on an AI model provided in this embodiment of this application is described by using an example in which the positioning apparatus based on an AI model performs the positioning method based on an AI model in this embodiment of this application.

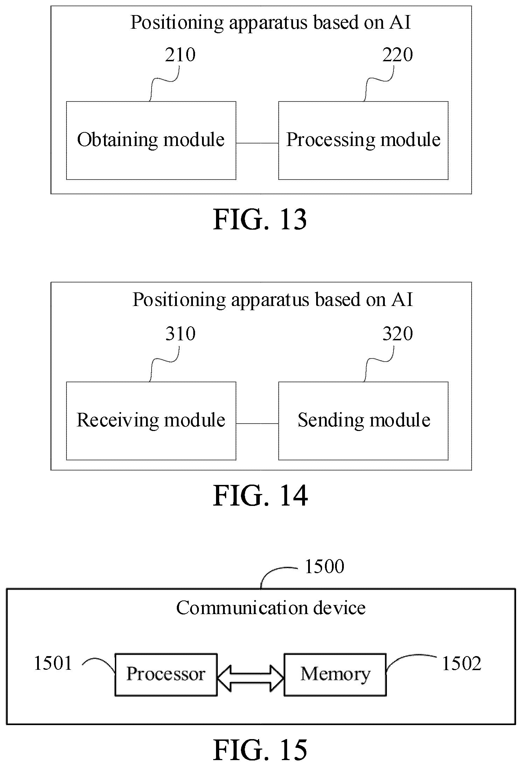

FIG. 13 is a first diagram of a structure of a positioning apparatus based on an AI model according to this application. As shown in FIG. 13, the positioning apparatus based on an AI model provided in this embodiment includes:
an obtaining module 210, configured to obtain first information associated with AI model-related information; and
a processing module 220, configured to determine target information based on the first information, where the target information includes at least one of the following: a target AI model, validity information of the AI model-related information, or feedback information obtained by performing positioning based on the target AI model; and
the first information indicates a valid application range of the AI model-related information, and the AI model-related information includes at least one of the following: the AI model, an AI model parameter, an input of the AI model, and an output of the AI model.

Optionally, the obtaining module 210 is further configured to:
obtain second information of a target terminal, where the second information indicates positioning-related information obtained by the target terminal.

The processing module 220 is specifically configured to:
determine the target information based on the first information and the second information.

Optionally, the first information includes at least one of the following: cell information; region information; valid time information; scenario information; and a signal-to-interference-plus-noise ratio SINR range.

The cell information includes at least one of the following:
identification information of one or more cells;
identification information of one or more base stations;
identification information of one or more transmission reception points TRPs;
cell list information; and
cell frequency-domain range information.

The region information includes at least one of the following:
region identification information; distance range information; and reference point information corresponding to the distance range.

The valid time information includes at least one of the following:
timer duration; and
a timer start time.

The scenario information includes at least one of the following:
a line of sight LOS scenario; a non-line-of-sight NLOS scenario; a complex scenario; an indoor scenario; and an outdoor scenario.

Optionally, the second information includes at least one of the following: position information of the target terminal, cell information, region information, timer information, scenario information, and an SINR measured by the target terminal.

The cell information is at least one piece of information of a serving cell of the target terminal, a reference cell, or a cell with the strongest reference signal received power RSRP, and the at least one piece of information includes: identification information and frequency-domain information.

The region information is region identification information of the target terminal.

The scenario information is information of a scenario in which the target terminal is located.

Optionally, the processing module 220 is specifically configured to:
determine, by the first communication device, the target information based on a value of a parameter in the second information and a range of a corresponding parameter in the first information.

Optionally, in a case that the value of the parameter in the second information falls within the range of the corresponding parameter in the first information, the AI model-related information is valid.

Optionally, in a case that the value of the parameter in the second information does not fall within the range of the corresponding parameter in the first information, the feedback information includes the second information; or
in a case that the value of the parameter in the second information does not fall within the range of the corresponding parameter in the first information, the feedback information includes the second information.

Optionally, if the first communication device determines that cell information of the target terminal does not fall within a range of cell information in the first information, the AI model-related information is invalid.

Optionally, if the first communication device determines that cell information of the target terminal does not fall within a range of cell information in the first information, the feedback information includes the cell information of the target terminal.

Optionally, if the first communication device determines that a timer of the target terminal expires, the AI model-related information is invalid or expires.

Optionally, the timer satisfies at least one of the following cases:
duration of the timer is timer duration in the first information;
the timer is counted from a timer start time in the first information; and
the timer is re-timed in a case that the AI model is updated and/or the AI model parameter is updated.

Optionally, if the first communication device determines that scenario information of the target terminal does not fall within a range of scenario information in the first information, the AI model-related information is invalid.

Optionally, if the first communication device determines that a position of the target terminal does not fall within a position range corresponding to cell information and/or region information in the first information, the AI model-related information is invalid.

Optionally, in a case that the value of the parameter in the second information falls within a first range of the corresponding parameter in the first information, the target AI model is an AI model corresponding to the first range of the first information.

Optionally, the obtaining module 210 is further configured to:
receive a plurality of pre-configured AI models and/or AI model parameters, and first information corresponding to the AI models and/or the AI model parameters.

Optionally, the obtaining module 210 is further configured to:
obtain, by the first communication device based on the first range of the first information, the AI model corresponding to the first range of the first information from the plurality of pre-configured AI models.

Optionally, the feedback information includes: the target AI model.

Optionally, that the feedback information is determined based on the validity information includes:
if the validity information indicates that the AI model-related information is valid, the feedback information at least includes the output of the AI model; or
if the validity information indicates that the AI model-related information is invalid, the feedback information includes at least one of the following: a cause of error; the second information; the validity information; an AI model request; an AI model update request; and a data collection request.

Optionally, the feedback information includes at least one of the following: the validity information, the second information, first measurement information, and the output of the AI model.

The first measurement information includes at least one of the following:
signal measurement information; position information; an error value; channel impulse response CIR information; and power delay profile PDP information.

Optionally, the second information includes second measurement information obtained by the target terminal, and the processing module 220 is specifically configured to:
in a case that the second measurement information is measurement information obtained through one measurement, determine, by the first communication device, the target information based on a value of a parameter in the second measurement information and a range of a corresponding parameter in the first information; or
in a case that the second measurement information is measurement information obtained through a plurality of measurements, determine, by the first communication device, the target information based on a consistency of a distribution of parameters in the second measurement information with a distribution of corresponding parameters in the first information.

Optionally, in a case that the value of the parameter in the second measurement information falls within the range of the corresponding parameter in the first information, the AI model-related information is valid; or
in a case that a value of at least one parameter in the second measurement information falls outside the range of the corresponding parameter in the first information, the AI model-related information is invalid.

Optionally, in a case that a distribution of a parameter in the second measurement information is consistent with a distribution of a corresponding parameter in the first information, the AI model-related information is valid; or
in a case that a distribution of at least one parameter in the second measurement information is not consistent with a distribution of a corresponding parameter in the first information, the AI model-related information is invalid.

Optionally, in a case that a distribution of at least one parameter in the second measurement information is not consistent with a distribution of a corresponding parameter in the first information, that the AI model-related information is invalid includes:
in a case that the distribution of the parameter in the second measurement information and the distribution of the corresponding parameter in the first information do not satisfy condition threshold information, the AI model-related information is invalid.

Optionally, the condition threshold information includes at least one of the following:
an absolute time corresponding to a σ principle, a 2σ principle, or a 3σ principle in a normal distribution;
a delay spread value corresponding to a σ principle, a 2σ principle, or a 3σ principle;
an angle spread value corresponding to a σ principle, a 2σ principle, or a 3σ principle;
a maximum difference between a mean of parameters in the second measurement information and a mean of corresponding parameters in the first information;
a maximum variance of a mean of parameters in the second measurement information and a mean of corresponding parameters in the first information;
a maximum difference between a mean of parameters in the second measurement information and a variance of corresponding parameters in the first information; and
a maximum variance of a mean of parameters in the second measurement information and a variance of corresponding parameters in the first information.

Optionally, the second measurement information includes at least one of the following:
a signal-to-interference-plus-noise ratio SINR range, a noise value, an NLOS-introduced absolute time value, a delay spread value, an angle spread value, an SINR mean and variance, a noise mean and variance, an NLOS-introduced absolute time mean and variance, a delay spread mean and variance, and an angle spread mean and variance.

The SINR range and the SINR mean and variance are derived from an SINR of at least one piece of information.

The noise value and the noise mean and variance are derived from a noise value of at least one piece of information.

The at least one piece of information includes: a measurement channel, a measurement signal, or first measurement information.

Optionally, the first measurement information includes at least one of the following:
signal measurement information; position information; an error value; channel impulse response CIR information; and power delay profile PDP information.

Optionally, the signal measurement information includes at least one of the following:
a reference signal time difference RSTD measurement result, a round trip delay measurement result, an angle of arrival AOA measurement result, an angle of departure AOD measurement result, a reference signal received power RSRP, multipath measurement information, and line of sight LOS indication information.

The multipath measurement information includes at least one of the following:
a power of a first path, a time delay of a first path, a time of arrival TOA of a first path, a reference signal time difference RSTD of a first path, an antenna subcarrier phase difference of a first path, an antenna subcarrier phase of a first path, a power of a multipath, a time delay of a multipath, a TOA of a multipath, an RSTD of a multipath, an antenna subcarrier phase difference of a multipath, and an antenna subcarrier phase of a multipath.

Optionally, the second measurement information further includes the first measurement information.

Optionally, the feedback information includes at least one of the following: the validity information, the second measurement information, the input of the AI model, the output of the AI model, AI model identification information, and an AI model update request.

Optionally, the first information includes at least one of the following:
an SINR range;
a noise range;
a noise distribution mean and/or variance;
an NLOS-introduced absolute time range or an NLOS-introduced absolute time mean and/or variance;
a delay spread range or a delay spread mean and/or variance;
an angle spread range or an angle spread mean and/or variance;
a range of the first measurement information; and
a mean and/or variance of the first measurement information.

Optionally, that the first information is obtained based on a test set and a validation set of the AI model includes at least one of the following cases:
the first information is characteristic information obtained based on input data of the test set and the validation set of the AI model;
the first information is characteristic information obtained based on output data of the test set and the validation set of the AI model; and
the first information is characteristic information obtained based on input data and output data of the test set and the validation set of the AI model.

Optionally, the second measurement information is characteristic information obtained based on the first measurement information; and/or
the second measurement information is characteristic information obtained based on the output of the AI model.

Optionally, the NLOS-introduced absolute time is obtained by subtracting time information obtained by a non-AI model from time information obtained by the AI model; and
the delay spread, the angle spread, and the noise distribution are characteristic information obtained based on the first measurement information or the output of the AI model.

Optionally, the input of the AI model and/or the output of the AI model include/includes at least one of the following:
positioning signal measurement information of the target terminal; position information of the target terminal; error information; a channel impulse response CIR; a power of a first path; a delay of a first path; a time of arrival TOA of a first path; a reference signal time difference RSTD of a first path; an angle of arrival of a first path; an antenna subcarrier phase difference of a first path; a power of a multipath; a delay of a multipath; a TOA of a multipath; an RSTD of a multipath; an angle of arrival of a multipath; an antenna subcarrier phase difference of a multipath; an average excess delay; a root-mean-square delay spread; and a coherence bandwidth.

The error information includes at least one of the following: a position error value, a measurement error value, an AI model error value, or an AI model parameter error value.

Optionally, the AI model update request includes at least one of the following:
an identifier ID of the AI model, an AI model and/or an AI model parameter that satisfy/satisfies the distribution of the second measurement information, and the AI model and/or the AI model parameter.

Optionally, the AI model includes at least one of the following:
an AI model type; and
an AI model structure.

Optionally, the AI model includes at least one of the following:
a list of neural networks, including at least one of the following: a neuron type of each neural network, a neuron weight and a bias of each neural network;
hyperparameter information; and
loss function information.

Optionally, the AI parameter includes at least one of the following:
hyperparameter information;
AI model description parameter information;
weight information of the AI model; and
an initial parameter of the AI model.

Optionally, the validity information includes at least one of the following:
validity indication information, indicating whether the AI model-related information is valid;
a validity degree;
a validity class;
a cause of invalidity;
reliability indication information, indicating whether a positioning result obtained based on the target AI model is reliable;
a reliability degree; and
a reliability rating.

Optionally, the obtaining module 210 is further configured to:
receive an updated AI model and/or AI model parameter, and first information corresponding to the AI model and/or the AI model parameter.

Optionally, the position information is obtained in at least one of the following manners, and the at least one manner includes:
an observed time difference of arrival OTDOA positioning method, a global navigation satellite system GNSS, a downlink time difference of arrival, an uplink time difference of arrival, an uplink Bluetooth angle of arrival AoA, a Bluetooth angle of departure AoD, a Bluetooth, a sensor, or wireless fidelity Wi-Fi.

Optionally, the first communication device includes at least one of the following:
a location management function LMF network element and an evolved device of the LMF network element;
a positioning server;
a network data analytics function NWADF network element;
a network-side device;
a terminal; and
a monitoring device actor.

The apparatus provided in this embodiment may be configured to perform the method in any one of the foregoing terminal-side method embodiments. Specific implementation processes and technical effects thereof are similar to those in the terminal-side method embodiment. For details, refer to detailed descriptions of the terminal-side method embodiment. Details are not described herein again.

FIG. 14 is a second diagram of a structure of a positioning apparatus based on an AI model according to this application. As shown in FIG. 14, the positioning apparatus based on an AI model provided in this embodiment includes:
a receiving module 310, configured to receive target information sent by a first communication device, where the target information includes at least one of the following: a target AI model, validity information of the AI model-related information, or feedback information obtained by performing positioning based on the target AI model; and
the target information is determined based on first information associated with the AI model-related information, the first information indicates a valid application range of the AI model-related information, and the AI model-related information includes at least one of the following: the AI model, an AI model parameter, an input of the AI model, and an output of the AI model.

Optionally, the positioning apparatus further includes:
a sending module 320, configured to send, to the first communication device, the AI model-related information and the first information associated with the AI model-related information.

Optionally, the sending module 320 is further configured to:
send, to the first communication device, a plurality of pre-configured AI models and/or AI model parameters, and first information corresponding to the AI models and/or the AI model parameters.

Optionally, the sending module 320 is further configured to:
send second information to the first communication device, where the second information indicates positioning-related information obtained by the terminal.

Optionally, the first information includes at least one of the following: cell information; region information; valid time information; scenario information; and a signal-to-interference-plus-noise ratio SINR range.

The cell information includes at least one of the following:
identification information of one or more cells;
identification information of one or more base stations;
identification information of one or more transmission reception points TRPs;
cell list information; and
cell frequency-domain range information.

The region information includes at least one of the following:
region identification information; distance range information; and reference point information corresponding to the distance range.

The valid time information includes at least one of the following:
timer duration; and
a timer start time.

The scenario information includes at least one of the following:
a line of sight LOS scenario; a non-line-of-sight NLOS scenario; a complex scenario; an indoor scenario; and an outdoor scenario.

Optionally, the second information includes at least one of the following: position information of the target terminal, cell information, region information, timer information, scenario information, and an SINR measured by the target terminal.

The cell information is at least one piece of information of a serving cell of the target terminal, a reference cell, or a cell with the strongest reference signal received power RSRP, and the at least one piece of information includes: identification information and frequency-domain information.

The region information is region identification information of the target terminal.

The scenario information is information of a scenario in which the target terminal is located.

Optionally, in a case that a value of a parameter in the second information falls within a range of a corresponding parameter in the first information, the AI model-related information is valid.

Optionally, in a case that a value of a parameter in the second information falls outside a range of a corresponding parameter in the first information, the AI model-related information is invalid.

Optionally, the feedback information includes at least one of the following: the validity information, the second information, first measurement information, and the output of the AI model.

The first measurement information includes at least one of the following:
signal measurement information; position information; an error value; channel impulse response CIR information; and power delay profile PDP information.

Optionally, the second information includes second measurement information obtained by the target terminal, and in a case that a value of a parameter in the second measurement information falls within a range of a corresponding parameter in the first information, the AI model-related information is valid; and/or
in a case that a value of at least one parameter in the second measurement information falls outside the range of the corresponding parameter in the first information, the AI model-related information is invalid.

Optionally, the second information includes second measurement information obtained by the target terminal, and in a case that a distribution of a parameter in the second measurement information is consistent with a distribution of a corresponding parameter in the first information, the AI model-related information is valid; and/or
in a case that a distribution of at least one parameter in the second measurement information is not consistent with a distribution of a corresponding parameter in the first information, the AI model-related information is invalid.

Optionally, in a case that a distribution of at least one parameter in the second measurement information is not consistent with a distribution of a corresponding parameter in the first information, that the AI model-related information is invalid includes:
in a case that the distribution of the parameter in the second measurement information and the distribution of the corresponding parameter in the first information do not satisfy condition threshold information, the AI model-related information is invalid.

Optionally, the condition threshold information includes at least one of the following:
an absolute time corresponding to a σ principle, a 2σ principle, or a 3σ principle in a normal distribution;
a delay spread value corresponding to a σ principle, a 2σ principle, or a 3σ principle;
an angle spread value corresponding to a σ principle, a 2σ principle, or a 3σ principle;
a maximum difference between a mean of parameters in the second measurement information and a mean of corresponding parameters in the first information;
a maximum variance of a mean of parameters in the second measurement information and a mean of corresponding parameters in the first information;
a maximum difference between a mean of parameters in the second measurement information and a variance of corresponding parameters in the first information; and
a maximum variance of a mean of parameters in the second measurement information and a variance of corresponding parameters in the first information.

Optionally, the second measurement information includes at least one of the following:
a signal-to-interference-plus-noise ratio SINR range, a noise value, an NLOS-introduced absolute time value, a delay spread value, an angle spread value, an SINR mean and variance, a noise mean and variance, an NLOS-introduced absolute time mean and variance, a delay spread mean and variance, and an angle spread mean and variance.

The SINR range and the SINR mean and variance are derived from an SINR of at least one piece of information.

The noise value and the noise mean and variance are derived from a noise value of at least one piece of information.

The at least one piece of information includes: a measurement channel, a measurement signal, or first measurement information.

Optionally, the first measurement information includes at least one of the following:
signal measurement information; position information; an error value; channel impulse response CIR information; and power delay profile PDP information.

Optionally, the feedback information includes at least one of the following: the validity information, the second measurement information, the input of the AI model, the output of the AI model, AI model identification information, and an AI model update request.

Optionally, the first information includes at least one of the following:
an SINR range;
a noise range;
a noise distribution mean and/or variance;
an NLOS-introduced absolute time range or an NLOS-introduced absolute time mean and/or variance;
a delay spread range or a delay spread mean and/or variance;
an angle spread range or an angle spread mean and/or variance;
a range of the first measurement information; and
a mean and/or variance of the first measurement information.

Optionally, the second communication device includes at least one of the following:
a terminal;
a model management device; and
a network-side device.

The apparatus provided in this embodiment may be configured to perform the method in any one of the foregoing network-side method embodiments. Specific implementation processes and technical effects thereof are similar to those in the network-side method embodiment. For details, refer to detailed descriptions of the network-side method embodiment. Details are not described herein again.

The positioning apparatus based on an AI model in this embodiment of this application may be an electronic device, for example, an electronic device with an operating system, or a component in an electronic device, for example, an integrated circuit or a chip. The electronic device may be a terminal or another device other than a terminal. For example, the terminal may include, but is not limited to, the type of terminal 11 listed above, and the another device may be a server, a network attached storage (Network Attached Storage, NAS) device, or the like. This is not specifically limited in this embodiment of this application.

The positioning apparatus based on an AI model provided in this embodiment of this application can implement each process implemented in the method embodiments shown in FIG. 2 to FIG. 12 and achieve same technical effects. Details are not described herein again to avoid repetition.

Optionally, as shown in FIG. 15, an embodiment of this application further provides a communication device 1500, including a processor 1501 and a memory 1502. The memory 1502 stores a program or instructions that can be run on the processor 1501. For example, when the communication device 1500 is a terminal, and when the program or the instructions are executed by the processor 1501, each step of the positioning method based on an AI model in method embodiments is implemented, and same technical effects can be achieved. When the communication device 1500 is a network-side device, and when the program or the instructions are executed by the processor 1501, each step of the positioning method based on an AI model in method embodiments is implemented, and same technical effects can be achieved. Details are not described herein again to avoid repetition.

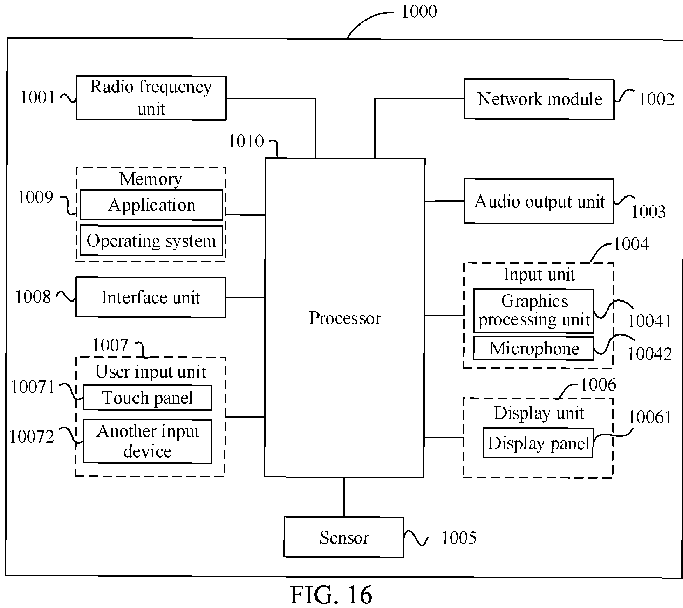

An embodiment of this application further provides a terminal, including a processor and a communication interface. The communication interface is configured to obtain first information associated with AI model-related information; and the processor is configured to determine target information based on the first information, where the target information includes at least one of the following: a target AI model, validity information of the AI model-related information, or feedback information obtained by performing positioning based on the target AI model; and the first information indicates a valid application range of the AI model-related information, and the AI model-related information includes at least one of the following: the AI model, an AI model parameter, an input of the AI model, and an output of the AI model. The terminal embodiment corresponds to the foregoing terminal-side method embodiment, and each implementation process and implementation of the foregoing method embodiment may be used in the terminal embodiment, and the same technical effect can be achieved. Specifically, FIG. 16 is a diagram of a hardware structure of a terminal according to an embodiment of this application.

The terminal 1000 includes, but is not limited to: at least some components of a radio frequency unit 1001, a network module 1002, an audio output unit 1003, an input unit 1004, a sensor 1005, a display unit 1006, a user input unit 1007, an interface unit 1008, a memory 1009, a processor 1010, and the like.

A person skilled in the art may understand that, the terminal 1000 may further include a power supply (for example, a battery) for supplying power to the components. The power supply may be logically connected to the processor 1010 by using a power management system, to implement functions such as charging, discharging, and power consumption management by using the power management system. The structure of the terminal shown in FIG. 16 constitutes no limitation on the terminal. The terminal may include more or fewer components than those shown in the figure, or combine some components, or have different component arrangements. Details are not described herein again.

It should be understood that, in this embodiment of this application, the input unit 1004 may include a graphics processing unit (Graphics Processing Unit, GPU) 10041 and a microphone 10042. The graphics processing unit 10041 performs processing on image data of a static image or a video that is obtained by an image capture device (for example, a camera) in a video capture mode or an image capture mode. The display unit 1006 may include a display panel 10061, and the display panel 10061 may be configured in a form of a liquid crystal display, an organic light-emitting diode, or the like. The user input unit 1007 includes at least one of a touch panel 10071 and another input device 10072. The touch panel 10071 is also referred to as a touchscreen. The touch panel 10071 may include two parts: a touch detection apparatus and a touch controller. The another input device 10072 may include, but is not limited to, a physical keyboard, a function button (such as a volume control button or a power button), a trackball, a mouse, and a joystick. Details are not described herein again.

In this embodiment of this application, the radio frequency unit 1001 receives downlink data received from a network-side device, and may transmit the downlink data to the processor 1010 for processing. In addition, the radio frequency unit 1001 may transmit uplink data to the network-side device. Generally, the radio frequency unit 1001 includes, but is not limited to, an antenna, at least one amplifier, a transceiver, a coupler, a low noise amplifier, a duplexer, and the like.

The memory 1009 may be configured to store a software program or instructions and various data. The memory 1009 may mainly include a first storage area for storing the program and the instructions and a second storage area for storing the data. The first storage area for storing the program and the instructions may store an operating system, an application or instructions required by at least one function (for example, a sound playback function and an image display function), and the like. In addition, the memory 1009 may include a volatile memory or a non-volatile memory, or the memory 1009 may include both a volatile memory and a non-volatile memory. A high-speed random access memory is included, and a non-volatile memory may further be included. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). The memory 1009 in this embodiment of this application includes, but is not limited to, these memories and any memory of another proper type, for example, at least one magnetic disk storage component, a flash memory component, or another non-volatile solid-state storage component.

The processor 1010 may include one or more processing units. Optionally, the processor 1010 may integrate an application processor and a modem processor. The application processor mainly processes an operation related to an operating system, a user interface, an application or instructions, and the like, and the modem processor mainly processes a wireless communication signal, for example, a baseband processor. It may be understood that, the foregoing modem processor may not be integrated into the processor 1010.

The radio frequency unit 1001 is configured to obtain first information associated with AI model-related information.

The processor 1010 is configured to determine target information based on the first information, where the target information includes at least one of the following: a target AI model, validity information of the AI model-related information, or feedback information obtained by performing positioning based on the target AI model; and

the first information indicates a valid application range of the AI model-related information, and the AI model-related information includes at least one of the following: the AI model, an AI model parameter, an input of the AI model, and an output of the AI model.

In the foregoing implementation, the radio frequency unit obtains the first information associated with the AI model-related information. The processor determines the target information based on the first information, where the target information includes at least one of the following: the target AI model, the validity information of the AI model-related information, or the feedback information obtained by performing positioning based on the target AI model. Because the first information indicates the valid application range of the AI model-related information, the target information is determined based on the first information, so that the AI model used for positioning better meets a requirement of an actual scenario, and the AI model and/or the AI model parameter can be updated based on the determined target information, so that a positioning result obtained based on the updated AI model is more accurate.

Optionally, the radio frequency unit 1001 is further configured to:
obtain second information of a target terminal, where the second information indicates positioning-related information obtained by the target terminal.

The processor 1010 is specifically configured to:
determine the target information based on the first information and the second information.

Optionally, the first information includes at least one of the following: cell information; region information; valid time information; scenario information; and a signal-to-interference-plus-noise ratio SINR range.

The cell information includes at least one of the following:
identification information of one or more cells;
identification information of one or more base stations;
identification information of one or more transmission reception points TRPs;
cell list information; and
cell frequency-domain range information.

The region information includes at least one of the following:
region identification information; distance range information; and reference point information corresponding to the distance range.

The valid time information includes at least one of the following:
timer duration; and
a timer start time.

The scenario information includes at least one of the following:
a line of sight LOS scenario; a non-line-of-sight NLOS scenario; a complex scenario; an indoor scenario; and an outdoor scenario.

Optionally, the second information includes at least one of the following: position information of the target terminal, cell information, region information, timer information, scenario information, and an SINR measured by the target terminal.

The cell information is at least one piece of information of a serving cell of the target terminal, a reference cell, or a cell with the strongest reference signal received power RSRP, and the at least one piece of information includes: identification information and frequency-domain information.

The region information is region identification information of the target terminal.

The scenario information is information of a scenario in which the target terminal is located.

Optionally, the processor 1010 is specifically configured to:
determine, by the first communication device, the target information based on a value of a parameter in the second information and a range of a corresponding parameter in the first information.

Optionally, in a case that the value of the parameter in the second information falls within the range of the corresponding parameter in the first information, the AI model-related information is valid.

Optionally, in a case that the value of the parameter in the second information does not fall within the range of the corresponding parameter in the first information, the feedback information includes the second information; or
in a case that the value of the parameter in the second information does not fall within the range of the corresponding parameter in the first information, the feedback information includes the second information.

Optionally, if the first communication device determines that cell information of the target terminal does not fall within a range of cell information in the first information, the AI model-related information is invalid.

Optionally, if the first communication device determines that cell information of the target terminal does not fall within a range of cell information in the first information, the feedback information includes the cell information of the target terminal.

Optionally, if the first communication device determines that a timer of the target terminal expires, the AI model-related information is invalid or expires.

Optionally, the timer satisfies at least one of the following cases:
duration of the timer is timer duration in the first information;
the timer is counted from a timer start time in the first information; and
the timer is re-timed in a case that the AI model is updated and/or the AI model parameter is updated.

Optionally, if the first communication device determines that scenario information of the target terminal does not fall within a range of scenario information in the first information, the AI model-related information is invalid.

Optionally, if the first communication device determines that a position of the target terminal does not fall within a position range corresponding to cell information and/or region information in the first information, the AI model-related information is invalid.

Optionally, in a case that the value of the parameter in the second information falls within a first range of the corresponding parameter in the first information, the target AI model is an AI model corresponding to the first range of the first information.

Optionally, the radio frequency unit 1001 is further configured to:
receive a plurality of pre-configured AI models and/or AI model parameters, and first information corresponding to the AI models and/or the AI model parameters.

Optionally, the radio frequency unit 1001 is further configured to:
obtain, by the first communication device based on the first range of the first information, the AI model corresponding to the first range of the first information from the plurality of pre-configured AI models.

Optionally, the feedback information includes: the target AI model.

Optionally, that the feedback information is determined based on the validity information includes:
if the validity information indicates that the AI model-related information is valid, the feedback information at least includes the output of the AI model; or
if the validity information indicates that the AI model-related information is invalid, the feedback information includes at least one of the following: a cause of error; the second information; the validity information; an AI model request; an AI model update request; and a data collection request.

Optionally, the feedback information includes at least one of the following: the validity information, the second information, first measurement information, and the output of the AI model.

The first measurement information includes at least one of the following:
signal measurement information; position information; an error value; channel impulse response CIR information; and power delay profile PDP information.

Optionally, the second information includes second measurement information obtained by the target terminal, and the processor 1010 is specifically configured to:
in a case that the second measurement information is measurement information obtained through one measurement, determine, by the first communication device, the target information based on a value of a parameter in the second measurement information and a range of a corresponding parameter in the first information; or
in a case that the second measurement information is measurement information obtained through a plurality of measurements, determine, by the first communication device, the target information based on a consistency of a distribution of parameters in the second measurement information with a distribution of corresponding parameters in the first information.

Optionally, in a case that the value of the parameter in the second measurement information falls within the range of the corresponding parameter in the first information, the AI model-related information is valid; or
in a case that a value of at least one parameter in the second measurement information falls outside the range of the corresponding parameter in the first information, the AI model-related information is invalid.

Optionally, in a case that a distribution of a parameter in the second measurement information is consistent with a distribution of a corresponding parameter in the first information, the AI model-related information is valid; or
in a case that a distribution of at least one parameter in the second measurement information is not consistent with a distribution of a corresponding parameter in the first information, the AI model-related information is invalid.

Optionally, in a case that a distribution of at least one parameter in the second measurement information is not consistent with a distribution of a corresponding parameter in the first information, that the AI model-related information is invalid includes:
in a case that the distribution of the parameter in the second measurement information and the distribution of the corresponding parameter in the first information do not satisfy condition threshold information, the AI model-related information is invalid.

Optionally, the condition threshold information includes at least one of the following:
an absolute time corresponding to a σ principle, a 2σ principle, or a 3σ principle in a normal distribution;
a delay spread value corresponding to a σ principle, a 2σ principle, or a 3σ principle;
an angle spread value corresponding to a σ principle, a 2σ principle, or a 3σ principle;
a maximum difference between a mean of parameters in the second measurement information and a mean of corresponding parameters in the first information;
a maximum variance of a mean of parameters in the second measurement information and a mean of corresponding parameters in the first information;
a maximum difference between a mean of parameters in the second measurement information and a variance of corresponding parameters in the first information; and
a maximum variance of a mean of parameters in the second measurement information and a variance of corresponding parameters in the first information.

Optionally, the second measurement information includes at least one of the following:
a signal-to-interference-plus-noise ratio SINK range, a noise value, an NLOS-introduced absolute time value, a delay spread value, an angle spread value, an SINK mean and variance, a noise mean and variance, an NLOS-introduced absolute time mean and variance, a delay spread mean and variance, and an angle spread mean and variance.

The SINR range and the SINR mean and variance are derived from an SINK of at least one piece of information.

The noise value and the noise mean and variance are derived from a noise value of at least one piece of information.

The at least one piece of information includes: a measurement channel, a measurement signal, or first measurement information.

Optionally, the first measurement information includes at least one of the following:
signal measurement information; position information; an error value; channel impulse response CIR information; and power delay profile PDP information.

Optionally, the signal measurement information includes at least one of the following:
a reference signal time difference RSTD measurement result, a round trip delay measurement result, an angle of arrival AOA measurement result, an angle of departure AOD measurement result, a reference signal received power RSRP, multipath measurement information, and line of sight LOS indication information.

The multipath measurement information includes at least one of the following:
a power of a first path, a time delay of a first path, a time of arrival TOA of a first path, a reference signal time difference RSTD of a first path, an antenna subcarrier phase difference of a first path, an antenna subcarrier phase of a first path, a power of a multipath, a time delay of a multipath, a TOA of a multipath, an RSTD of a multipath, an antenna subcarrier phase difference of a multipath, and an antenna subcarrier phase of a multipath.

Optionally, the second measurement information further includes the first measurement information.

Optionally, the feedback information includes at least one of the following: the validity information, the second measurement information, the input of the AI model, the output of the AI model, AI model identification information, and an AI model update request.

Optionally, the first information includes at least one of the following:
an SINR range;
a noise range;
a noise distribution mean and/or variance;
an NLOS-introduced absolute time range or an NLOS-introduced absolute time mean and/or variance;
a delay spread range or a delay spread mean and/or variance;
an angle spread range or an angle spread mean and/or variance;
a range of the first measurement information; and
a mean and/or variance of the first measurement information.

Optionally, that the first information is obtained based on a test set and a validation set of the AI model includes at least one of the following cases:
the first information is characteristic information obtained based on input data of the test set and the validation set of the AI model;
the first information is characteristic information obtained based on output data of the test set and the validation set of the AI model; and
the first information is characteristic information obtained based on input data and output data of the test set and the validation set of the AI model.

Optionally, the second measurement information is characteristic information obtained based on the first measurement information; and/or
the second measurement information is characteristic information obtained based on the output of the AI model.

Optionally, the NLOS-introduced absolute time is obtained by subtracting time information obtained by a non-AI model from time information obtained by the AI model; and
the delay spread, the angle spread, and the noise distribution are characteristic information obtained based on the first measurement information or the output of the AI model.

Optionally, the input of the AI model and/or the output of the AI model include/includes at least one of the following:
positioning signal measurement information of the target terminal; position information of the target terminal; error information; a channel impulse response CIR; a power of a first path; a delay of a first path; a time of arrival TOA of a first path; a reference signal time difference RSTD of a first path; an angle of arrival of a first path; an antenna subcarrier phase difference of a first path; a power of a multipath; a delay of a multipath; a TOA of a multipath; an RSTD of a multipath; an angle of arrival of a multipath; an antenna subcarrier phase difference of a multipath; an average excess delay; a root-mean-square delay spread; and a coherence bandwidth.

The error information includes at least one of the following: a position error value, a measurement error value, an AI model error value, or an AI model parameter error value.

Optionally, the AI model update request includes at least one of the following:
an identifier ID of the AI model, an AI model and/or an AI model parameter that satisfy/satisfies the distribution of the second measurement information, and the AI model and/or the AI model parameter.

Optionally, the AI model includes at least one of the following:
an AI model type; and
an AI model structure.

Optionally, the AI model includes at least one of the following:
a list of neural networks, including at least one of the following: a neuron type of each neural network, a neuron weight and a bias of each neural network;
hyperparameter information; and
loss function information.

Optionally, the AI parameter includes at least one of the following:
hyperparameter information;
AI model description parameter information;
weight information of the AI model; and
an initial parameter of the AI model.

Optionally, the validity information includes at least one of the following:
validity indication information, indicating whether the AI model-related information is valid;
a validity degree;
a validity class;
a cause of invalidity;
reliability indication information, indicating whether a positioning result obtained based on the target AI model is reliable;
a reliability degree; and
a reliability rating.

Optionally, the radio frequency unit 1001 is further configured to:
receive an updated AI model and/or AI model parameter, and first information corresponding to the AI model and/or the AI model parameter.

Optionally, the position information is obtained in at least one of the following manners, and the at least one manner includes:
an observed time difference of arrival OTDOA positioning method, a global navigation satellite system GNSS, a downlink time difference of arrival, an uplink time difference of arrival, an uplink Bluetooth angle of arrival AoA, a Bluetooth angle of departure AoD, a Bluetooth, a sensor, or wireless fidelity Wi-Fi.

Optionally, the first communication device includes at least one of the following:
a location management function LMF network element and an evolved device of the LMF network element;
a positioning server;
a network data analytics function NWADF network element;
another network-side device;
a terminal; and
a monitoring device actor.

An embodiment of this application further provides a network-side device, including a processor and a communication interface. The communication interface is configured to obtain first information associated with AI model-related information; and the processor is configured to determine target information based on the first information, where the target information includes at least one of the following: a target AI model, validity information of the AI model-related information, or feedback information obtained by performing positioning based on the target AI model; and the first information indicates a valid application range of the AI model-related information, and the AI model-related information includes at least one of the following: the AI model, an AI model parameter, an input of the AI model, and an output of the AI model. The network-side device embodiment corresponds to the foregoing first communication device-side method embodiment or the foregoing second communication device-side method embodiment, and each implementation process and implementation of the foregoing method embodiment may be used in the network-side device embodiment, and the same technical effect can be achieved.

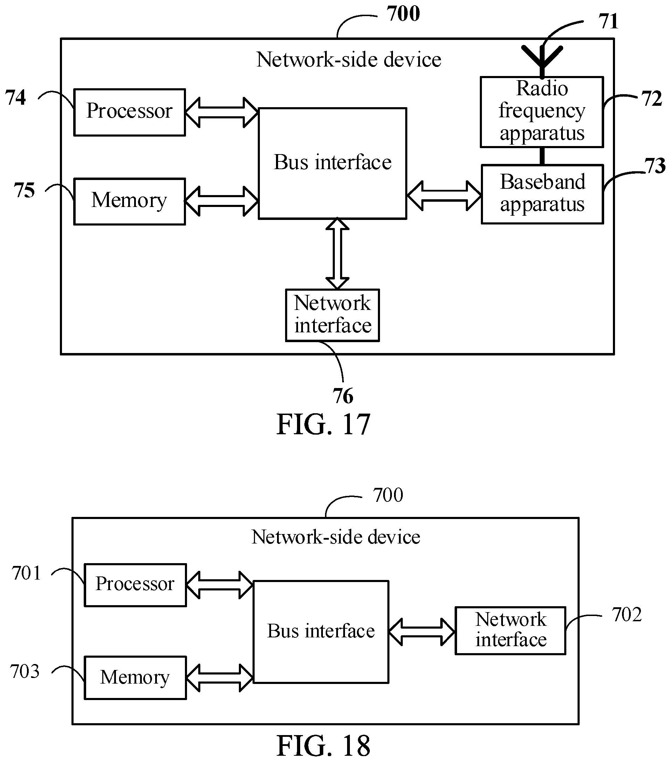

Specifically, an embodiment of this application further provides a network-side device. As shown in FIG. 17, the network-side device 700 includes: an antenna 71, a radio frequency apparatus 72, a baseband apparatus 73, a processor 74, and a memory 75. The antenna 71 is connected to the radio frequency apparatus 72. In an uplink direction, the radio frequency apparatus 72 receives information through the antenna 71 and sends the received information to the baseband apparatus 73 for processing. In a downlink direction, the baseband apparatus 73 processes to-be-sent information and sends the information to the radio frequency apparatus 72, and the radio frequency apparatus 72 processes the received information and sends the information through the antenna 71.

The foregoing band processing apparatus may be located in the baseband apparatus 73, and the method performed by the network-side device in the foregoing embodiment may be implemented in the baseband apparatus 73. The baseband apparatus 73 includes a baseband processor 74 and a memory 75.

The baseband apparatus 73 may include, for example, at least one baseband board, and a plurality of chips are disposed on the baseband board. As shown in FIG. 17, one of the chips is, for example, the baseband processor 74, connected to the memory 75 through a bus interface, to invoke a program in the memory 75, to perform an operation performed by the network device shown in the foregoing method embodiment.

The baseband apparatus 73 in the network-side device may further include a network interface 76, configured to exchange information with the radio frequency apparatus 72. The interface is, for example, a common public radio interface (common public radio interface, CPRI for short).

Specifically, the network-side device 700 in this embodiment of the present invention further includes: instructions or a program stored in the memory 75 and run on the processor 74. The processor 74 invokes the instructions or the program in the memory 75, to perform the methods performed by the modules shown in FIG. 13 or FIG. 14, and same technical effects are achieved. Details are not described herein again to avoid repetition.

An embodiment of this application further provides a network-side device. As shown in FIG. 18, the network-side device 700 includes: a processor 701, a network interface 702, and a memory 703. The network interface 702 is, for example, a common public radio interface (common public radio interface, CPRI).

Specifically, the network-side device 700 in this embodiment of this application further includes: instructions or a program stored in the memory 703 and run on the processor 701. The processor 701 invokes the instructions or the program in the memory 703, to perform the methods performed by the modules shown in FIG. 13 or FIG. 14, and same technical effects are achieved. Details are not described herein again to avoid repetition.

A first communication device and/or a second communication device may be implemented by using the foregoing network-side device embodiment.

An embodiment of this application further provides a readable storage medium. The readable storage medium stores a program or instructions. When the program or the instructions are executed by a processor, each process of the positioning method based on an AI model in method embodiments is implemented, and same technical effects can be achieved. Details are not described herein again to avoid repetition.

The processor is the processor in the terminal described in the foregoing embodiment. The readable storage medium includes a computer-readable storage medium, for example, a computer read only memory (ROM), a random access memory (RAM), a magnetic or optical disk, and the like.

An embodiment of this application further provides a chip. The chip includes a processor and a communication interface. The communication interface is coupled to the processor, and the processor is configured to run a program or instructions, to implement each process of the positioning method based on an AI model in method embodiments, and same technical effects can be achieved. Details are not described herein again to avoid repetition.

It should be understood that, the chip in this embodiment of this application may alternatively be referred to as a system-level chip, a system chip, a chip system, a system-on-chip, or the like.

An embodiment of this application further provides a computer program/program product. The computer program/program product is stored in a storage medium. The computer program/program product is executed by at least one processor, to implement each process of the positioning method based on an AI model in method embodiments, and same technical effects can be achieved. Details are not described herein again to avoid repetition.

An embodiment of this application further provides a communication system, including: a terminal and a network-side device, where the terminal may be configured to perform steps of the foregoing positioning method based on an AI model, and the network-side device may be configured to perform steps of the foregoing positioning method based on an AI model.

It should be noted that, the terms "include", "comprise", or any other variation thereof in this specification is intended to cover a non-exclusive inclusion, so that a process, a method, an article, or an apparatus that includes a list of elements not only includes those elements but also includes other elements that are not expressly listed, or further includes elements inherent to such a process, a method, an article, or an apparatus. An element preceded by "includes a" does not, without more constraints, preclude the presence of additional identical elements in the process, the method, the article, or the apparatus that includes the element. In addition, it should be noted that, scopes of the method and the apparatus in the implementations of this application are not limited to performing functions in an order shown or discussed, but may include performing functions in a substantially concurrent manner or in reverse order depending on functionality involved. For example, the methods described may be performed in an order different from that described, and various steps may alternatively be added, omitted, or combined. In addition, characteristics described with reference to some examples may alternatively be combined in other examples.

Based on the descriptions of the foregoing implementations, a person skilled in the art may clearly understand that the method according to the foregoing embodiment may be implemented by software in addition to necessary universal hardware platform, or by using hardware. In many cases, the former is a better implementation. Based on such an understanding, the technical solutions of this application essentially, or the part contributing to the conventional technology, may be presented in a form of a computer software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in embodiments of this application.

Embodiments of this application are described with reference to the accompanying drawings. This application is not limited to the foregoing specific implementations, and the foregoing specific implementations are merely examples and not limited. A person of ordinary skill in the art may also make various variations under the inspiration of this application and without departing from the purpose of this application and the protection scope of the claims, and such variations shall all fall within the protection scope of this application.

## Claims

1. A positioning method based on an artificial intelligence AI model, comprising:
obtaining, by a first communication device, first information associated with AI model-related information; and
determining, by the first communication device, target information based on the first information, wherein the target information comprises at least one of the following: a target AI model, validity information of the AI model-related information, or feedback information obtained by performing positioning based on the target AI model; and
the first information indicates a valid application range of the AI model-related information, and the AI model-related information comprises at least one of the following: the AI model, an AI model parameter, an input of the AI model, and an output of the AI model.

2. The positioning method based on an AI model according to claim 1, wherein the method further comprises:
obtaining, by the first communication device, second information of a target terminal, wherein the second information indicates positioning-related information obtained by the target terminal; and
the determining, by the first communication device, target information based on the first information comprises:
determining, by the first communication device, the target information based on the first information and the second information.

3. The positioning method based on an AI model according to claim 1 or 2, wherein the first information comprises at least one of the following: cell information; region information; valid time information; scenario information; and a signal-to-interference-plus-noise ratio SINK range.

4. The positioning method based on an AI model according to claim 3, wherein
the cell information comprises at least one of the following:
identification information of one or more cells;
identification information of one or more base stations;
identification information of one or more transmission reception points TRPs;
cell list information; and
cell frequency-domain range information;
the region information comprises at least one of the following:
region identification information; distance range information; and reference point information corresponding to the distance range;
the valid time information comprises at least one of the following:
timer duration; and
a timer start time; or
the scenario information comprises at least one of the following:
a line of sight LOS scenario; a non-line-of-sight NLOS scenario; a complex scenario; an indoor scenario; and an outdoor scenario.

5. The positioning method based on an AI model according to claim 2, wherein
the second information comprises at least one of the following: position information of the target terminal, cell information, region information, timer information, scenario information, and an SINK measured by the target terminal, wherein
the cell information is at least one piece of information of a serving cell of the target terminal, a reference cell, or a cell with the strongest reference signal received power RSRP, and the at least one piece of information comprises: identification information and frequency-domain information;
the region information is region identification information of the target terminal; and
the scenario information is information of a scenario in which the target terminal is located.

6. The positioning method based on an AI model according to claim 2, wherein the determining, by the first communication device, the target information based on the first information and the second information comprises:
determining, by the first communication device, the target information based on a value of a parameter in the second information and a range of a corresponding parameter in the first information.

7. The positioning method based on an AI model according to claim 6, wherein
in a case that the value of the parameter in the second information falls within the range of the corresponding parameter in the first information, the AI model-related information is valid.

8. The positioning method based on an AI model according to claim 6, wherein
in a case that the value of the parameter in the second information falls within the range of the corresponding parameter in the first information, the feedback information comprises the second information; or
in a case that the value of the parameter in the second information does not fall within the range of the corresponding parameter in the first information, the feedback information comprises the second information.

9. The positioning method based on an AI model according to claim 6, wherein if the first communication device determines that cell information of the target terminal does not fall within a range of cell information in the first information, the AI model-related information is invalid.

10. The positioning method based on an AI model according to claim 6, wherein if the first communication device determines that cell information of the target terminal does not fall within a range of cell information in the first information, the feedback information comprises the cell information of the target terminal.

11. The positioning method based on an AI model according to claim 6, wherein if the first communication device determines that a timer of the target terminal expires, the AI model-related information is invalid or expires.

12. The positioning method based on an AI model according to claim 11, wherein the timer satisfies at least one of the following cases:
duration of the timer is timer duration in the first information;
the timer is counted from a timer start time in the first information; and
the timer is re-timed in a case that the AI model is updated and/or the AI model parameter is updated.

13. The positioning method based on an AI model according to claim 6, wherein if the first communication device determines that scenario information of the target terminal does not fall within a range of scenario information in the first information, the AI model-related information is invalid.

14. The positioning method based on an AI model according to claim 6, wherein if the first communication device determines that a position of the target terminal does not fall within a position range corresponding to cell information and/or region information in the first information, the AI model-related information is invalid.

15. The positioning method based on an AI model according to claim 6, wherein in a case that the value of the parameter in the second information falls within a first range of the corresponding parameter in the first information, the target AI model is an AI model corresponding to the first range of the first information.

16. The positioning method based on an AI model according to claim 1 or 15, wherein the method further comprises:
receiving, by the first communication device, a plurality of pre-configured AI models and/or AI model parameters, and first information corresponding to the AI models and/or the AI model parameters.

17. The positioning method based on an AI model according to claim 16, wherein the method further comprises:
obtaining, by the first communication device based on the first range of the first information, the AI model corresponding to the first range of the first information from the plurality of pre-configured AI models.

18. The positioning method based on an AI model according to claim 15, wherein
the feedback information comprises: the target AI model.

19. The positioning method based on an AI model according to claim 6, 7, or 8, or claims 11 to 14, wherein that the feedback information is determined based on the validity information comprises:
if the validity information indicates that the AI model-related information is valid, the feedback information at least comprises the output of the AI model; or
if the validity information indicates that the AI model-related information is invalid, the feedback information comprises at least one of the following: a cause of error; the second information; the validity information; an AI model request; an AI model update request; and a data collection request.

20. The positioning method based on an AI model according to claim 2 or 15, wherein the feedback information comprises one of the following: the validity information, the second information, first measurement information, and the output of the AI model; and
the first measurement information comprises at least one of the following:
signal measurement information; position information; an error value; channel impulse response CIR information; and power delay profile PDP information.

21. The positioning method based on an AI model according to claim 2, wherein the second information comprises second measurement information obtained by the target terminal, and the determining, by the first communication device, the target information based on the first information and the second information comprises:
in a case that the second measurement information is measurement information obtained through one measurement, determining, by the first communication device, the target information based on a value of a parameter in the second measurement information and a range of a corresponding parameter in the first information; or
in a case that the second measurement information is measurement information obtained through a plurality of measurements, determining, by the first communication device, the target information based on a consistency of a distribution of a parameter in the second measurement information with a distribution of a corresponding parameter in the first information.

22. The positioning method based on an AI model according to claim 21, wherein in a case that the value of the parameter in the second measurement information falls within the range of the corresponding parameter in the first information, the AI model-related information is valid; or
in a case that a value of at least one parameter in the second measurement information falls outside the range of the corresponding parameter in the first information, the AI model-related information is invalid.

23. The positioning method based on an AI model according to claim 21, wherein in a case that the distribution of the parameter in the second measurement information is consistent with the distribution of the corresponding parameter in the first information, the AI model-related information is valid; or
in a case that a distribution of at least one parameter in the second measurement information is not consistent with the distribution of the corresponding parameter in the first information, the AI model-related information is invalid.

24. The positioning method based on an AI model according to claim 23, wherein in a case that the distribution of the at least one parameter in the second measurement information is not consistent with the distribution of the corresponding parameter in the first information, that the AI model-related information is invalid comprises:
in a case that the distribution of the parameter in the second measurement information and the distribution of the corresponding parameter in the first information do not satisfy condition threshold information, the AI model-related information is invalid.

25. The positioning method based on an AI model according to claim 24, wherein
the condition threshold information comprises at least one of the following:
an absolute time corresponding to a σ principle, a 2σ principle, or a 3σ principle in a normal distribution;
a delay spread value corresponding to a σ principle, a 2σ principle, or a 3σ principle;
an angle spread value corresponding to a σ principle, a 2σ principle, or a 3σ principle;
a maximum difference between a mean of parameters in the second measurement information and a mean of corresponding parameters in the first information;
a maximum variance of a mean of parameters in the second measurement information and a mean of corresponding parameters in the first information;
a maximum difference between a mean of parameters in the second measurement information and a variance of corresponding parameters in the first information; and
a maximum variance of a mean of parameters in the second measurement information and a variance of corresponding parameters in the first information.

26. The positioning method based on an AI model according to any one of claims 21 to 25, wherein the second measurement information comprises at least one of the following:
a signal-to-interference-plus-noise ratio SINK range, a noise value, an NLOS-introduced absolute time value, a delay spread value, an angle spread value, an SINK mean and variance, a noise mean and variance, an NLOS-introduced absolute time mean and variance, a delay spread mean and variance, and an angle spread mean and variance, wherein
the SINR range and the SINR mean and variance are derived from an SINK of at least one piece of information;
the noise value and the noise mean and variance are derived from a noise value of at least one piece of information; and
the at least one piece of information comprises: a measurement channel, a measurement signal, or first measurement information.

27. The positioning method based on an AI model according to claim 26, wherein
the first measurement information comprises at least one of the following:
signal measurement information; position information; an error value; channel impulse response CIR information; and power delay profile PDP information.

28. The positioning method based on an AI model according to claim 20 or 27, wherein the signal measurement information comprises at least one of the following:
a reference signal time difference RSTD measurement result, a round trip delay measurement result, an angle of arrival AOA measurement result, an angle of departure AOD measurement result, a reference signal received power RSRP, multipath measurement information, and line of sight LOS indication information; and
the multipath measurement information comprises at least one of the following:
a power of a first path, a time delay of a first path, a time of arrival TOA of a first path, a reference signal time difference RSTD of a first path, an antenna subcarrier phase difference of a first path, an antenna subcarrier phase of a first path, a power of a multipath, a time delay of a multipath, a TOA of a multipath, an RSTD of a multipath, an antenna subcarrier phase difference of a multipath, and an antenna subcarrier phase of a multipath.

29. The positioning method based on an AI model according to claim 27, wherein
the second measurement information further comprises the first measurement information.

30. The positioning method based on an AI model according to any one of claims 21 to 25, wherein the feedback information comprises at least one of the following: the validity information, the second measurement information, the input of the AI model, the output of the AI model, AI model identification information, and an AI model update request.

31. The positioning method based on an AI model according to any one of claims 21 to 25, wherein
the first information comprises at least one of the following:
an SINK range;
a noise range;
a noise distribution mean and/or variance;
an NLOS-introduced absolute time range or an NLOS-introduced absolute time mean and/or variance;
a delay spread range or a delay spread mean and/or variance;
an angle spread range or an angle spread mean and/or variance;
a range of the first measurement information; and
a mean and/or variance of the first measurement information.

32. The positioning method based on an AI model according to any of claims 1 to 31, wherein that the first information is obtained based on a test set and a validation set of the AI model comprises at least one of the following cases:
the first information is characteristic information obtained based on input data of the test set and the validation set of the AI model;
the first information is characteristic information obtained based on output data of the test set and the validation set of the AI model; and
the first information is characteristic information obtained based on input data and output data of the test set and the validation set of the AI model.

33. The positioning method based on an AI model according to any one of claims 21 to 25, wherein
the second measurement information is characteristic information obtained based on the first measurement information; and/or
the second measurement information is characteristic information obtained based on the output of the AI model.

34. The positioning method based on an AI model according to claim 31, wherein
the NLOS-introduced absolute time is obtained by subtracting time information obtained by a non-AI model from time information obtained by the AI model; and
the delay spread, the angle spread, and the noise distribution are characteristic information obtained based on the first measurement information or the output of the AI model.

35. The positioning method based on an AI model according to claim 1 or 30, wherein the input of the AI model and/or the output of the AI model comprise/comprises at least one of the following:
positioning signal measurement information of the target terminal; position information of the target terminal; error information; a channel impulse response CIR; a power of a first path; a delay of a first path; a time of arrival TOA of a first path; a reference signal time difference RSTD of a first path; an angle of arrival of a first path; an antenna subcarrier phase difference of a first path; a power of a multipath; a delay of a multipath; a TOA of a multipath; an RSTD of a multipath; an angle of arrival of a multipath; an antenna subcarrier phase difference of a multipath; an average excess delay; a root-mean-square delay spread; and a coherence bandwidth; and
the error information comprises at least one of the following: a position error value, a measurement error value, an AI model error value, or an AI model parameter error value.

36. The positioning method based on an AI model according to claim 30, wherein the AI model update request comprises at least one of the following:
an identifier ID of the AI model, an AI model and/or an AI model parameter that satisfy/satisfies the distribution of the second measurement information, and the AI model and/or the AI model parameter.

37. The positioning method based on an AI model according to any one of claims 1 to 36, wherein
the AI model comprises at least one of the following:
an AI model type; and
an AI model structure.

38. The positioning method based on an AI model according to any one of claims 1 to 36, wherein the AI model comprises at least one of the following:
a list of neural networks, comprising at least one of the following: a neuron type of each neural network, a neuron weight and a bias of each neural network;
hyperparameter information; and
loss function information.

39. The positioning method based on an AI model according to any one of claims 1 to 36, wherein the AI parameter comprises at least one of the following:
hyperparameter information;
AI model description parameter information;
weight information of the AI model; and
an initial parameter of the AI model.

40. The positioning method based on an AI model according to any one of claims 1 to 36, wherein the validity information may comprise at least one of the following:
validity indication information, indicating whether the AI model-related information is valid;
a validity degree;
a validity class;
a cause of invalidity;
reliability indication information, indicating whether a positioning result obtained based on the target AI model is reliable;
a reliability degree; and
a reliability rating.

41. The positioning method based on an AI model according to any one of claims 1 to 36, wherein the method further comprises:
receiving, by the first communication device, an updated AI model and/or AI model parameter, and first information corresponding to the AI model and/or the AI model parameter.

42. The positioning method based on an AI model according to any one of claims 5, 20, 27, or 35, wherein the position information is obtained in at least one of the following manners, and the at least one manner comprises:
an observed time difference of arrival OTDOA positioning method, a global navigation satellite system GNSS, a downlink time difference of arrival, an uplink time difference of arrival, an uplink Bluetooth angle of arrival AoA, a Bluetooth angle of departure AoD, a Bluetooth, a sensor, or wireless fidelity Wi-Fi.

43. The positioning method based on an AI model according to any one of claims 1 to 36, wherein the first communication device comprises at least one of the following:
a location management function LMF network element and an evolved device of the LMF network element;
a positioning server;
a network data analytics function NWADF network element;
another network-side device;
a terminal; and
a monitoring device actor.

44. A positioning method based on an AI model, comprising:
receiving, by a second communication device, target information sent by a first communication device, wherein the target information comprises at least one of the following: a target AI model, validity information of AI model-related information, or feedback information obtained by performing positioning based on the target AI model; and
the target information is determined based on first information associated with the AI model-related information, the first information indicates a valid application range of the AI model-related information, and the AI model-related information comprises at least one of the following: the AI model, an AI model parameter, an input of the AI model, and an output of the AI model.

45. The positioning method based on an AI model according to claim 44, wherein the method further comprises:
sending, by the second communication device to the first communication device, the AI model-related information and the first information associated with the AI model-related information.

46. The positioning method based on an AI model according to claim 44, wherein the method further comprises:
sending, by the second communication device, a plurality of pre-configured AI models and/or AI model parameters, and first information corresponding to the AI models and/or the AI model parameters.

47. The positioning method based on an AI model according to any one of claims 44 to 46, wherein the method further comprises:
sending, by the second communication device, second information to the first communication device, wherein the second information indicates positioning-related information obtained by a target terminal.

48. The positioning method based on an AI model according to any one of claims 44 to 46, wherein the first information comprises at least one of the following: cell information; region information; valid time information; scenario information; and a signal-to-interference-plus-noise ratio SINK range.

49. The positioning method based on an AI model according to claim 47, wherein
the second information comprises at least one of the following: position information of the target terminal, cell information, region information, timer information, scenario information, and an SINK measured by the target terminal, wherein
the cell information is at least one piece of information of a serving cell of the target terminal, a reference cell, or a cell with the strongest reference signal received power RSRP, and the at least one piece of information comprises: identification information and frequency-domain information;
the region information is region identification information of the target terminal; and
the scenario information is information of a scenario in which the target terminal is located.

50. The positioning method based on an AI model according to claim 47, wherein
in a case that a value of a parameter in the second information falls within a range of a corresponding parameter in the first information, the AI model-related information is valid.

51. The positioning method based on an AI model according to claim 47, wherein in a case that a value of a parameter in the second information falls outside a range of a corresponding parameter in the first information, the AI model-related information is invalid.

52. The positioning method based on an AI model according to claim 47, wherein the feedback information comprises at least one of the following: the validity information, the second information, first measurement information, and the output of the AI model; and
the first measurement information comprises at least one of the following:
signal measurement information; position information; an error value; channel impulse response CIR information; and power delay profile PDP information.

53. The positioning method based on an AI model according to claim 47, wherein the second information comprises second measurement information obtained by the target terminal, and in a case that a value of a parameter in the second measurement information falls within a range of a corresponding parameter in the first information, the AI model-related information is valid; and/or
in a case that a value of at least one parameter in the second measurement information falls outside a range of a corresponding parameter in the first information, the AI model-related information is invalid.

54. The positioning method based on an AI model according to claim 47, wherein the second information comprises second measurement information obtained by the target terminal, and in a case that a distribution of a parameter in the second measurement information is consistent with a distribution of a corresponding parameter in the first information, the AI model-related information is valid; and/or
in a case that a distribution of at least one parameter in the second measurement information is not consistent with a distribution of a corresponding parameter in the first information, the AI model-related information is invalid.

55. The positioning method based on an AI model according to claim 54, wherein in a case that the distribution of the at least one parameter in the second measurement information is not consistent with the distribution of the corresponding parameter in the first information, that the AI model-related information is invalid comprises:
in a case that the distribution of the parameter in the second measurement information and the distribution of the corresponding parameter in the first information do not satisfy condition threshold information, the AI model-related information is invalid.

56. The positioning method based on an AI model according to claim 55, wherein
the condition threshold information comprises at least one of the following:
an absolute time corresponding to a σ principle, a 2σ principle, or a 3σ principle in a normal distribution;
a delay spread value corresponding to a σ principle, a 2σ principle, or a 3σ principle;
an angle spread value corresponding to a σ principle, a 2σ principle, or a 3σ principle;
a maximum difference between a mean of parameters in the second measurement information and a mean of corresponding parameters in the first information;
a maximum variance of a mean of parameters in the second measurement information and a mean of corresponding parameters in the first information;
a maximum difference between a mean of parameters in the second measurement information and a variance of corresponding parameters in the first information; and
a maximum variance of a mean of parameters in the second measurement information and a variance of corresponding parameters in the first information.

57. The positioning method based on an AI model according to any one of claims 53 to 56, wherein the second measurement information comprises at least one of the following:
a signal-to-interference-plus-noise ratio SINK range, a noise value, an NLOS-introduced absolute time value, a delay spread value, an angle spread value, an SINK mean and variance, a noise mean and variance, an NLOS-introduced absolute time mean and variance, a delay spread mean and variance, and an angle spread mean and variance, wherein
the SINR range and the SINR mean and variance are derived from an SINK of at least one piece of information;
the noise value and the noise mean and variance are derived from a noise value of at least one piece of information; and
the at least one piece of information comprises: a measurement channel, a measurement signal, or first measurement information.

58. The positioning method based on an AI model according to claim 57, wherein
the first measurement information comprises at least one of the following:
signal measurement information; position information; an error value; channel impulse response CIR information; and power delay profile PDP information.

59. The positioning method based on an AI model according to any one of claims 53 to 56, wherein the feedback information comprises at least one of the following: the validity information, the second measurement information, the input of the AI model, the output of the AI model, AI model identification information, and an AI model update request.

60. The positioning method based on an AI model according to any one of claims 53 to 56, wherein
the first information comprises at least one of the following:
an SINK range;
a noise range;
a noise distribution mean and/or variance;
an NLOS-introduced absolute time range or an NLOS-introduced absolute time mean and/or variance;
a delay spread range or a delay spread mean and/or variance;
an angle spread range or an angle spread mean and/or variance;
a range of the first measurement information; and
a mean and/or variance of the first measurement information.

61. The positioning method based on an AI model according to any one of claims 44 to 60, wherein the second communication device comprises at least one of the following:
a terminal;
a model management device; and
a network-side device.

62. A positioning apparatus based on an AI model, comprising:
an obtaining module, configured to obtain first information associated with AI model-related information; and
a processing module, configured to determine target information based on the first information, wherein the target information comprises at least one of the following: a target AI model, validity information of the AI model-related information, or feedback information obtained by performing positioning based on the target AI model; and
the first information indicates a valid application range of the AI model-related information, and the AI model-related information comprises at least one of the following: the AI model, an AI model parameter, an input of the AI model, and an output of the AI model.

63. A positioning apparatus based on an AI model, comprising:
a receiving module, configured to receive target information sent by a first communication device, wherein the target information comprises at least one of the following: a target AI model, validity information of the AI model-related information, or feedback information obtained by performing positioning based on the target AI model; and
the target information is determined based on first information associated with the AI model-related information, the first information indicates a valid application range of the AI model-related information, and the AI model-related information comprises at least one of the following: the AI model, an AI model parameter, an input of the AI model, and an output of the AI model.

64. A first communication device, comprising a processor and a memory, wherein the memory stores a program or instructions that can be run on the processor, and when the program or the instructions are executed by the processor, steps of the positioning method based on an AI model according to any one of claims 1 to 43 are implemented.

65. A second communication device, comprising a processor and a memory, wherein the memory stores a program or instructions that can be run on the processor, and when the program or the instructions are executed by the processor, steps of the positioning method based on an AI model according to any one of claims 44 to 61 are implemented.

66. A readable storage medium, wherein the readable storage medium stores a program or instructions, and when the program or the instructions are executed by a processor, steps of the positioning method based on an AI model according to any one of claims 1 to 43 are implemented, or steps of the positioning method based on an AI model according to any one of claims 44 to 61 are implemented.
